(19) Europäisches Patentamt
European Patent Office
Office européen des brevets

(11) **EP 4 503 180 A1**

(12) **EUROPEAN PATENT APPLICATION**
published in accordance with Art. 153(4) EPC

(43) Date of publication:
**05.02.2025 Bulletin 2025/06**

(21) Application number: **23775357.9**

(22) Date of filing: **24.03.2023**

(51) International Patent Classification (IPC):
*H01M 4/36* (2006.01)   *H01M 4/587* (2010.01)
*H01M 4/133* (2010.01)   *H01M 4/134* (2010.01)
*H01M 10/052* (2010.01)   *H01M 4/02* (2006.01)

(52) Cooperative Patent Classification (CPC):
**H01M 4/02; H01M 4/133; H01M 4/134; H01M 4/36;
H01M 4/587; H01M 10/052;** Y02E 60/10

(86) International application number:
**PCT/KR2023/003962**

(87) International publication number:
**WO 2023/182862 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.03.2022 KR 20220037651**

(71) Applicant: **Daejoo Electronic Materials Co., Ltd.
Siheung-si, Gyeonggi-do 15094 (KR)**

(72) Inventors:
• **JEON, Young Min**
**Siheung-si, Gyeonggi-do 15094 (KR)**
• **LIM, Jong Chan**
**Siheung-si, Gyeonggi-do 15094 (KR)**
• **PARK, Jeong Gyu**
**Siheung-si, Gyeonggi-do 15094 (KR)**

(74) Representative: **HGF
HGF Limited
1 City Walk
Leeds LS11 9DX (GB)**

(54) **SILICON-CARBON MIXTURE, METHOD FOR PREPARING SAME, AND ANODE ACTIVE MATERIAL AND LITHIUM SECONDARY BATTERY COMPRISING SAME**

(57)   The present invention relates to a silicon-carbon mixture, a method for preparing same, and a negative electrode active material and a lithium secondary battery comprising same. The silicon-carbon mixture includes two or more kinds of composites, comprises silicon particles, magnesium silicate, and carbon, and has a molar ratio of oxygen (O) atoms to silicon (Si) atoms (O/Si) that satisfies 0.06 to 0.90. Accordingly, when the silicon-carbon mixture is applied to a negative electrode active material, it is possible to simultaneously enhance the discharge capacity, initial efficiency, and capacity retention rate after cycles of a lithium secondary battery.

[Fig. 1]

EP 4 503 180 A1

## Description

### Technical Field

The present invention relates to a silicon-carbon mixture, to a process for preparing the same, and to a negative electrode active material and a lithium secondary battery comprising the same.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well as the application thereof to large electronic devices such as automobiles and power storage systems, is being actively conducted.

Carbon materials are widely used as a negative electrode active material for such a lithium secondary battery. Silicon-based negative electrode active materials are being studied in order to further enhance the capacity of batteries. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction Scheme 1}] \qquad 22Li + 5Si = Li_{22}Si_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surfaces of the silicon particles are coated with a carbon layer using a chemical vapor deposition (CVD) method.

In addition, Japanese Laid-open Patent Publication No. 2016-502253 discloses a negative electrode active material comprising porous silicon-based particles and carbon particles, wherein the carbon particles comprise fine carbon particles and coarse-grained carbon particles having different average particle diameters.

However, although these prior art documents relate to negative electrode active materials containing silicon and carbon, they have a limit to suppressing the volume expansion and contraction during charging and discharging. There may be a problem in that the capacity retention rate is significantly deteriorated upon cycles of thousands or more for a long period of time, thereby deteriorating reliability.

[Prior art documents]

[Patent documents]

(Patent Document 1) Japanese Patent No. 4393610
(Patent Document 2) Japanese Laid-open Patent Publication No. 2016-502253
(Patent Document 3) Korean Laid-open Patent Publication No. 2018-0106485

### Disclosure of Invention

### Technical Problem

An object of the present invention is to provide a silicon-carbon mixture with enhanced performance of a lithium secondary battery when applied to a negative electrode active material as it comprises two or more types of composites, comprises silicon particles, magnesium silicate, and carbon, and has a molar ratio (O/Si) of oxygen (O) atoms to silicon (Si) atoms controlled to a specific range.

Another object of the present invention is to provide a process for preparing the silicon-carbon mixture.

Still another object of the present invention is to provide a negative electrode active material comprising the silicon-carbon mixture and a lithium secondary battery comprising the same.

**Solution to Problem**

In order to accomplish the above object, an embodiment of the present invention provides a silicon-carbon mixture, which comprises two or more types of composites, comprises silicon particles, magnesium silicate, and carbon, and has a molar ratio (O/Si) of oxygen (O) atoms to silicon (Si) atoms of 0.06 and 0.90.

Another embodiment provides a process for preparing the silicon-carbon mixture, which comprises a first step of obtaining a first composite; a second step of obtaining a second composite; and a third step of mixing the first composite and the second composite, wherein the first composite comprises first silicon particles and first carbon, and the second composite comprises second silicon particles, magnesium silicate, and second carbon.

Still another embodiment provides a negative electrode active material, which comprises the silicon-carbon mixture.

Further, another embodiment provides a lithium secondary battery comprising the negative electrode active material.

**Advantageous Effects of Invention**

According to the embodiment, there is provided a silicon-carbon mixture, which comprises two or more types of composites, comprises silicon particles, magnesium silicate, and carbon, and has a molar ratio (O/Si) of oxygen (O) atoms to silicon (Si) atoms controlled to a specific range; thus, it is possible to achieve a lithium secondary battery having balanced performance of excellent discharge capacity, initial efficiency, and capacity retention rate upon cycles.

In particular, as the molar ratio (O/Si) of oxygen (O) atoms to silicon (Si) atoms in the silicon-carbon mixture is controlled to a specific range, the content of carbon and porosity can be easily controlled. As a result, an excellent capacity retention rate can be maintained even upon cycles of thousands or more for a long period of time, whereby it is possible to further enhance reliability.

In addition, the process according to an embodiment has an advantage in that mass production is possible through a continuous process with minimized steps.

**Brief Description of Drawings**

The following drawings attached to the present specification illustrate preferred embodiments of the present invention and serve to further understand the technical idea of the present invention together with the description of the present invention. Accordingly, the present invention should not be construed as being limited only to those depicted in the drawings.

Fig. 1 shows the results of analyzing the crystal structure of the silicon-carbon mixture prepared in Example 1 with an X-ray diffraction analyzer (X'Pert3 of Malvern Panalytical).

Fig. 2 shows the results of analyzing the crystal structure of the silicon-carbon mixture prepared in Example 7 with an X-ray diffraction analyzer (X'Pert3 of Malvern Panalytical).

Fig. 3 is an ion beam scanning electron microscope (FIB-SEM) photograph of the porous silicon composite prepared in Preparation Example 2-1 observed at a magnification of 10,000.

Fig. 4 is an ion beam scanning electron microscope (FIB-SEM) photograph of the porous silicon composite prepared in Preparation Example 2-1 observed at a magnification of 30,000.

Fig. 5 is an ion beam scanning electron microscope (FIB-SEM) photograph of the porous silicon composite prepared in Preparation Example 2-1 observed at a magnification of 100,000.

Fig. 6 is a scanning electron microscope (FE-SEM) photograph of the first composite prepared in Preparation Example 3-1 observed at a magnification of 10,000.

Fig. 7 is a photograph of a bright field image of the first composite prepared in Preparation Example 3-1 using a transmission electron microscope (FE-TEM).

Fig. 8 is a photograph of a dark field image and a bright field image of the first composite prepared in Preparation Example 3-1 using a transmission electron microscope (FE-TEM).

**Best Mode for Carrying Out the Invention**

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about," unless otherwise indicated.

**[Silicon-carbon mixture]**

The silicon-carbon mixture according to an embodiment comprises two or more types of composites, comprises silicon particles, magnesium silicate, and carbon, and has a molar ratio (O/Si) of oxygen (O) atoms to silicon (Si) atoms of 0.06 and 0.90.

As the silicon-carbon mixture according to an embodiment comprises two or more types of composites, comprises silicon particles, magnesium silicate, and carbon, and has a molar ratio (O/Si) of oxygen (O) atoms to silicon (Si) atoms controlled to a specific range, it is possible to achieve a silicon-carbon mixture with a desired structure and physical properties and to enhance all of the discharge capacity, initial efficiency, and capacity retention rate upon cycles of a lithium secondary battery when it is applied to a negative electrode active material thereof.

The molar ratio (O/Si) of oxygen (O) atoms to silicon (Si) atoms in the silicon-carbon mixture may be preferably 0.09 to 0.80, more preferably, 0.09 to 0.60, even more preferably, 0.10 to less than 0.60, most preferably, 0.1 to 0.50. As the silicon-carbon mixture that satisfies the above molar ratio (O/Si) of oxygen (O) atoms to silicon (Si) atoms in the silicon-carbon mixture is applied to a negative electrode active material, the content of silicon particles as an active material may be increased, thereby enhancing the capacity retention rate, discharge capacity, and initial efficiency of a lithium secondary battery at the same time. In particular, if the structure of pores and the porosity are controlled, while the molar ratio (O/Si) of oxygen (O) atoms to silicon (Si) atoms in the silicon-carbon mixture is controlled to a specific range, an excellent capacity retention rate can be maintained even after cycles of thousands or more for a long period of time, resulting in significant advantages of enhanced reliability.

If the molar ratio (O/Si) of oxygen (O) atoms to silicon (Si) atoms in the silicon-carbon mixture is less than the above range, its manufacture is not easy due to a problem in the process. If the molar ratio (O/Si) of oxygen (O) atoms to silicon (Si) atoms in the silicon-carbon mixture exceeds the above range, the desired effect may be reduced.

In addition, the molar ratio (Mg/Si) of magnesium (Mg) atoms to silicon (Si) atoms in the silicon-carbon mixture may be 0.009 to 0.55, 0.009 to 0.30, or 0.009 to 0.10. If the molar ratio (Mg/Si) of magnesium (Mg) atoms to silicon (Si) atoms in the silicon-carbon mixture satisfies the above range, the resistance is reduced when lithium is detached and intercalated, so that the discharge capacity, initial efficiency, and capacity retention rate after cycles of a lithium secondary battery can be further enhanced.

In addition, the two or more types of composites may comprise a first composite and a second composite, which have different components, structures, and physical properties from each other.

In addition, according to various embodiments, the contents of the respective components contained in the first composite and in the second composite and their mixing ranges can be adjusted to optimal ranges required for enhancing the performance of a lithium secondary battery. In the manufacturing process, the etching conditions and carbon coating conditions can be adjusted in various ways, whereby it is possible to optimize the physical properties of the silicon-carbon mixture such as specific surface area, density, and porosity. Thus, it is possible to further enhance the performance of a lithium secondary battery and to further enhance reliability.

The specific structure, components and contents, and physical properties of each of the first composite and the second composite contained in the silicon-carbon mixture are as described below.

The weight ratio of the first composite and the second composite may be an important factor in achieving the desired performance of a lithium secondary battery.

For example, the weight ratio of the first composite and the second composite may be 90: 10 to 5:95, 90: 10 to 10:90, 90: 10 to 20:80, 90: 10 to 50:50, 90: 10 to 60:40, 90: 10 to 65:35, or 90: 10 to 70:30. If the weight ratio of the first composite and the second composite satisfies the above range, it may be easier to achieve the desired effect, and, especially, a lithium secondary battery having well-balanced characteristics of excellent initial capacity and cycle characteristics can be provided.

In addition, as the silicon-carbon mixture according to an embodiment comprises the first composite and the second composite as uniformly mixed in the above range, it is possible to achieve a lithium secondary battery with desired characteristics for the uses thereof by adjusting physical properties such as the size and porosity of silicon particles, the content of magnesium, specific surface area, thermal expansion rate, and porosity of the final silicon-carbon mixture, and the like.

In the weight ratio of the first composite and the second composite, if the weight ratio of the first composite and the second composite is outside the above range, so that the content of the first composite is too small or the content of the second composite is too large, it may be difficult to achieve the desired molar ratio (O/Si) of oxygen (O) atoms to silicon (Si) atoms of the silicon-carbon mixture, and the effect of mitigating the volume expansion of silicon particles due to charging and discharging may be reduced. In such a case, the cycle characteristics or discharge capacity of a lithium secondary battery may be deteriorated. In addition, the capacity retention rate after cycles of a lithium secondary battery of the silicon-carbon mixture may be deteriorated.

Meanwhile, the silicon-carbon mixture comprises magnesium silicate. In addition, the silicon-carbon mixture may comprise magnesium silicate contained in a second composite to be described below.

In addition, the carbon contained in the silicon-carbon mixture may comprise first carbon and second carbon to be described below.

Meanwhile, the content of magnesium (Mg) in the silicon-carbon mixture may be 0.1% by weight to 15% by weight, preferably, 0.1% by weight to 10% by weight, more preferably, 0.5% by weight to 5% by weight, based on the total weight of the silicon-carbon mixture. If the content of magnesium (Mg) in the silicon-carbon mixture is equal to, or greater than, the above lower limit within the range, the initial efficiency of a lithium secondary battery may be enhanced. If it is equal to, or less than, the above upper limit within the range, it may be advantageous from the viewpoint of the charge and discharge capacity, cycle characteristics, and handling stability of a lithium secondary battery.

The content of oxygen (O) in the silicon-carbon mixture may be 1% by weight to 25% by weight, preferably, 1% by weight to 21% by weight, more preferably, 1% by weight to 17% by weight, even more preferably, 3% by weight to 17% by weight, based on the total weight of the silicon-carbon mixture.

If the content of oxygen (O) in the silicon-carbon mixture is less than the above range, the degree of expansion is increased during the charging of a lithium secondary battery, which deteriorates the cycle characteristics. In addition, if the content of oxygen (O) in the silicon-carbon mixture exceeds the above range, when the silicon-carbon mixture is used as a negative electrode active material, there may be a concern that an irreversible reaction with lithium increases, which deteriorates the initial charge and discharge efficiency, it may be readily delaminated from the negative electrode current collector, and the charge and discharge cycle of a lithium secondary battery is deteriorated.

The content of silicon (Si) in the silicon-carbon mixture may be 35% by weight to 80% by weight, preferably, 40% by weight to 80% by weight, more preferably, 45% by weight to 80% by weight, even more preferably, 45% by weight to 70% by weight, based on the total weight of the silicon-carbon mixture.

If the content of silicon (Si) in the silicon-carbon mixture is less than the above range, the amount of an active material for the occlusion and release of lithium is small, which may reduce the charge and discharge capacity of a lithium secondary battery. On the other hand, if it exceeds the above range, the charge and discharge capacity of a lithium secondary battery may be increased, whereas the expansion and contraction of the electrode during charging and discharging may be excessively increased, and the negative electrode active material powder may be further pulverized, which may deteriorate the cycle characteristics of the lithium secondary battery.

The content of carbon (C) in the silicon-carbon mixture may be 9% by weight to 50% by weight, preferably, 9% by weight to 40% by weight, more preferably, 10% by weight to 35% by weight, based on the total weight of the silicon-carbon mixture.

If the content of carbon (C) in the silicon-carbon mixture is less than the above range, there is a concern that the effect of enhanced conductivity may be insignificant, and the electrode lifespan characteristics of a lithium secondary battery may be deteriorated. In addition, if the content of carbon (C) in the silicon-carbon mixture exceeds the above range, the discharge capacity of a lithium secondary battery may decrease, and the bulk density may decrease, so that the discharge capacity per unit volume may be deteriorated.

Meanwhile, the silicon-carbon mixture may further comprise silicon oxide (also referred to as a silicon oxide compound). In such an event, the capacity characteristics and lifespan characteristics of a lithium secondary battery may be further enhanced, and volume expansion may be reduced. In particular, the silicon oxide may be evenly distributed with the silicon particles. In such a case, volume expansion may be reduced.

The silicon oxide contained in the silicon-carbon mixture may comprise first silicon oxide, second silicon oxide, and a combination thereof to be described below.

In addition, the silicon oxide may be a compound represented by $SiO_x$ ($0.4 \leq x \leq 2$).

That is, the silicon-carbon mixture may further comprise silicon oxide ($SiO_x$, $0.4 < x \leq 2$).

Specifically, the silicon oxide ($SiO_x$, $0.4 < x \leq 2$) may be employed in an amount of 0.1% by weight to 5% by weight based on the total weight of the silicon-carbon mixture.

If the content of the silicon oxide is outside the above range, the silicon oxide may react with lithium to form strong alkali compounds such as $Li_4SiO_4$ and $Li_2O$. The silicon oxide is preferably amorphous. If the silicon oxide is amorphous, pulverization can be prevented or mitigated even when a volume change of silicon particles takes place during intercalation and detachment of lithium, and a side reaction between silicon particles and an electrolyte can be prevented or reduced.

Meanwhile, the silicon particles contained in the silicon-carbon mixture may comprise first silicon particles and second silicon particles as described below.

In addition, the silicon-carbon mixture may comprise a silicon aggregate in which silicon particles are combined with each other. The silicon aggregate is as described below.

When the silicon particles (e.g., first silicon particles and second silicon particles) in the silicon-carbon mixture are subjected to X-ray diffraction analysis (converted from the results of X-ray diffraction analysis), the average value of the crystallite size of the silicon particles may be 1 nm to 15 nm, preferably, 1 nm to 10 nm, more preferably, 2 nm to 8 nm, even more preferably, 3 nm to 6 nm. In such a case, the performance of a lithium secondary battery such as discharge capacity, initial efficiency, or cycle lifespan characteristics may be further enhanced.

The silicon-carbon mixture may have an average particle diameter ($D_{50}$) of 2 $\mu$m to 15 $\mu$m, preferably, 2 $\mu$m to 10 $\mu$m, more preferably, 2 $\mu$m to 6 $\mu$m.

In addition, the silicon-carbon mixture may have a minimum particle diameter, Dmin, of 0.3 $\mu$m or less and a maximum particle diameter, Dmax, of 8 $\mu$m to 30 $\mu$m. If Dmin and Dmax of the silicon-carbon mixture each satisfy the above ranges, the specific surface area of the silicon-carbon mixture is reduced, whereby the initial efficiency and cycle characteristics of a lithium secondary battery can be further enhanced.

Meanwhile, the silicon-carbon mixture may have a density of 1.8 g/cm$^3$ to 2.5 g/cm$^3$, preferably, 2.0 g/cm$^3$ to 2.5 g/cm$^3$, more preferably, 2.0 g/cm$^3$ to 2.4 g/cm$^3$. If the density of the silicon-carbon mixture satisfies the above range, it may be more advantageous for achieving the desired effects.

The silicon-carbon mixture may have a specific surface area (Brunauer-Emmett-Teller method; BET) of 2 m$^2$/g to 50 m$^2$/g, preferably, 2 m$^2$/g to 30 m$^2$/g, more preferably, 2 m$^2$/g to 8 m$^2$/g. If the specific surface area of the silicon-carbon mixture is less than the above range, the charge and discharge characteristics of a lithium secondary battery may be deteriorated. If it exceeds the above range, the contact area of the silicon-carbon mixture with an electrolyte increases, so that the decomposition reaction of the electrolyte is expedited, which may cause side reactions. If the specific surface area of the silicon-carbon mixture satisfies the above range, doping and dedoping of lithium take place actively, and irreversible capacity decreases, so that excellent capacity characteristics and high rates characteristics may be achieved.

The silicon-carbon mixture may comprise pores.

In addition, the silicon-carbon mixture may comprise few pores.

In addition, the silicon-carbon mixture may not comprise pores.

If the silicon-carbon mixture comprises pores therein, the diameters of the pores may be the same as, or different from, each other.

The pores may comprise internal pores.

The internal pores comprise inner pores (also referred to as closed pores) and open pores. At least a part of the wall of a pore may be open to form an open structure, so that it may be connected to other pores, or it may not be so.

The pores may comprise inner pores. The inner pore refers to an independent pore that is not connected to other pores because the entire wall of the pore is closed to form a closed structure.

The pores may comprise open pores.

According to an embodiment, the silicon-carbon mixture may have a porosity of 0.1% to 30%, preferably, 0.1% to 20%, more preferably, 0.1% to 10%. The pores may be used interchangeably with voids. The porosity may refer to internal porosity.

If the porosity of the silicon-carbon mixture satisfies the above range, a buffering effect of volume expansion may be produced while sufficient mechanical strength is maintained.

If the porosity of the silicon-carbon mixture, that is, the internal porosity of the silicon-carbon mixture, is less than the above range, it may be difficult to control the volume expansion of a negative electrode active material during charging and discharging. If it exceeds the above range, the mechanical strength may be reduced due to a large number of pores present in the negative electrode active material, and there is a concern that the negative electrode active material may be collapsed in the process of manufacturing a lithium secondary battery, for example, during the mixing of a negative electrode active material composition (slurry) and the rolling step after coating.

If the internal porosity of the silicon-carbon mixture satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

The internal pores comprise open pores on the surface of the silicon-carbon mixture and inner pores.

In the present specification, the porosity may be defined as in the following Equation 1. The porosity may refer to internal porosity.

Porosity (%) = pore volume per unit mass / (specific volume + pore volume per unit mass)          [Equation 1]

The measurement of the porosity is not particularly limited. Based on an embodiment of the present invention, for example, it may be measured with BELSORP (BET equipment) of BEL JAPAN using an adsorption gas such as nitrogen or by a mercury permeation method (Hg porosimeter).

However, it may be difficult in the present invention to measure an accurate value using an adsorption gas such as nitrogen or a mercury permeation method. This may be a case where the surface of each composite is sealed by a carbon coating of the first composite and/or the second composite, so that nitrogen gas does not reach the inner pores. In such a case, the internal porosity may be obtained by the sum of a value obtained by adsorption gas (BET) such as nitrogen or a mercury permeation method and the inner porosity of the following Equation 2.

[Equation 2]

$$\text{Inner porosity (\%)} = \{1 - (\text{measured density} / \text{calculated density})\} \times 100$$

In addition, in Equation 2, the measured density may be measured using helium.

In the silicon-carbon mixture, when the inner pores are closed and nitrogen gas or mercury does not reach the inner pores, the porosity measured by the nitrogen adsorption method may be considered to be close to open porosity.

### Various examples of the silicon-carbon mixture

The silicon-carbon mixture may have various structures.

Specifically, the silicon-carbon mixture may comprise a silicon-carbon mixture (1), a silicon-carbon mixture (2), and a combination thereof depending on the porosity.

Specifically, the silicon-carbon mixture (1) may be a silicon-carbon mixture comprising a small amount of pores, and the silicon-carbon mixture (2) may be a porous mixture.

In the silicon-carbon mixture according to an embodiment, the silicon-carbon mixture (1) and the silicon-carbon mixture (2) each having a controlled porosity can be obtained by adjusting the carbon coating method and the carbon coating amount. The carbon coating may be formed by a chemical thermal decomposition deposition (chemical vapor deposition (CVD)) method.

In addition, the porosity of the silicon-carbon mixture may be controlled by adjusting the etching conditions for the first composite, for example, an etching solution (etchant), its concentration, etching time, and the like; and/or the carbon coating conditions and the carbon coating amount of each of the first composite and the second composite, for example, the type of carbon source, coating temperature, coating time, and the like, in the process for preparing a silicon-carbon mixture as described below. The technical significance resides in that the porosity of the silicon-carbon mixture can be optimized by this method according to the characteristics required for a lithium secondary battery.

### Silicon-carbon mixture (1)

The silicon-carbon mixture (1) according to an embodiment may comprise a small amount of pores.

Specifically, the silicon-carbon mixture (1) may have an internal porosity of 0. 1% to 10%, preferably, 0.1% to 8%, more preferably, 0.1% to 5%. The method for measuring the internal porosity is as described above.

If the internal porosity of the silicon-carbon mixture (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

The internal porosity of the silicon-carbon mixture (1) may be controlled by adjusting the etching conditions for the first composite and the carbon coating conditions and the carbon coating amount of each of the first composite and the second composite.

For example, the internal porosity of the silicon composite obtained by etching before the carbon coating of the first composite (first-first or first-second step in the preparation process described below) may be 10% to 50%, preferably, 15% % to 50%, more preferably, 20% to 50%. However, the internal porosity of a first composite obtained by forming a first carbon inside the silicon composite and a first carbon layer on the surface of the silicon composite using a chemical thermal decomposition deposition method after the etching (first-third step in the preparation method described below) may be adjusted in terms of the carbon coating conditions and the carbon coating amount such that the silicon-carbon mixture (1) has an internal porosity in the above range.

That is, in the preparation process of the first composite, a large amount of internal pores present in the silicon composite formed after the etching may be filled with carbon by carbon coating through a chemical thermal decomposition deposition method, and the amount of carbon filled in the internal pores can be adjusted by controlling the carbon coating conditions and the amount of carbon coating such that the silicon-carbon mixture (1) has an internal porosity that satisfies the above range.

Meanwhile, the silicon-carbon mixture (1) may have an inner porosity of 0.1% to 6%, preferably, 0.1% to 5%, more preferably, 0.1% to 4%.

If the inner porosity of the silicon-carbon mixture (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

If the internal porosity and/or the inner porosity of the silicon-carbon mixture (1) each satisfy the above ranges, it is possible to maintain an excellent capacity retention rate even after cycles of thousands or more for a long period of time, resulting in significant advantages of enhanced reliability.

**Silicon-carbon mixture (2)**

The silicon-carbon mixture (2) according to an embodiment may be porous as it comprises a large amount of pores.

Specifically, the silicon-carbon mixture (2) may have an internal porosity of 4% to 20%, preferably, 6% to 20%, more preferably, 8% to 20%.

If the internal porosity of the silicon-carbon mixture (2) satisfies the above range, the volume expansion of silicon particles that may take place during the charging and discharging of a lithium secondary battery may be mitigated and suppressed through the pores.

If the internal porosity of the silicon-carbon mixture (2) exceeds the above range, the mechanical strength may be reduced due to a large number of pores present in the negative electrode active material, and the negative electrode active material may be collapsed in the process of manufacturing a lithium secondary battery, for example, during the mixing of a negative electrode active material composition (slurry) and the rolling step after coating.

Meanwhile, the silicon-carbon mixture (2) may have an inner porosity of 2% to 10%, preferably, greater than 4% to 10%, more preferably, 6% to 10%.

If the inner porosity of the silicon-carbon mixture (2) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance lifespan characteristics.

Since the silicon-carbon mixture (2) has a porous structure, an electrolyte easily penetrates into the silicon-carbon mixture (2), whereby the charge and discharge characteristics of a lithium secondary battery can be enhanced.

Hereinafter, a first composite and a second composite contained in the silicon-carbon mixture will be described in detail.

**<First composite>**

In the silicon-carbon mixture according to an embodiment, the first composite comprises first silicon particles and first carbon.

Specifically, the first composite may comprise first silicon particles. In addition, the first composite may comprise a first silicon aggregate in which the first silicon particles are combined with each other.

Specifically, the first composite may comprise a first silicon aggregate having a three-dimensional (3D) structure in which two or more of the first silicon particles are combined with each other. Since the first silicon particles charge lithium, the capacity of a lithium secondary battery may be decreased if the first composite does not comprise the first silicon particles. In particular, if a first silicon aggregate in which the first silicon particles are combined with each other is employed, excellent mechanical properties such as strength can be obtained, a negative electrode active material composition can be prepared with good dispersion, and a negative electrode active material composition can be applied on a current collector with excellent workability.

According to an embodiment, the first composite may comprise a silicon composite comprising the first silicon particles and first carbon.

In addition, the first silicon aggregates may be uniformly distributed inside the first composite, specifically, inside the silicon composite, and the first silicon particles may comprise silicon particles that are not combined with each other. The first silicon particles and/or the first silicon aggregates may be uniformly distributed inside the first composite, specifically, inside the silicon composite. In such a case, excellent electrochemical properties such as charge and discharge may be achieved.

The first composite may comprise first silicon particles, specifically, a first silicon aggregate in which the first silicon particles are combined with (or interconnected to) each other, a first carbon layer may be formed on the surface of the first silicon particle and/or the first silicon aggregate, and first carbon may be formed as it is uniformly dispersed and/or distributed between the first silicon particles. In addition, a first carbon layer may be formed on the surface of the silicon composite.

For example, the first composite may comprise a first carbon layer on the surface of the first silicon particles and/or the first silicon aggregates and a first carbon layer on the surface of the silicon composite comprising the first silicon particles and/or the first silicon aggregates.

In the present specification, the term "combined (or interconnected)" refers to a state in which silicon particles in the first composite are combined (fused) with at least one other silicon particle and connected to each other, or a structure in which the silicon particles are continuously connected (silicon aggregate).

The inside of the first composite may be more firmly coupled by the first carbon and the first carbon layer. As a result, it is possible to minimize the pulverization of the silicon-carbon mixture comprising the first composite by a change in volume during the charging and discharging of a lithium secondary battery.

The first composite is a composite in which first silicon aggregates, in which a plurality of first silicon particles are combined with each other, are uniformly distributed in a composite whose structure is in the form of a single mass, for example, a polyhedral, spherical, or similar shape. It may be in a single composite in which first carbon and a first carbon layer comprising the first carbon surround a part or all of the surfaces of one or more of the first silicon particles or the surfaces of secondary first silicon particles (first silicon aggregates) formed by the aggregation of two or more of the first silicon particles.

In the first composite, the inside of the silicon composite obtained after etching and before carbon coating may have a structure similar to that of a three-dimensional pomegranate (hereinafter, referred to as a pomegranate structure). In the pomegranate structure, a wall may be formed inside a core in a state in which nano-sized first silicon particles are combined with each other. In addition, internal pores may be formed as surrounded by these walls. The internal pores may be very uniformly distributed inside the silicon composite. The internal pores may comprise inner pores and open pores.

Thereafter, a large amount of first carbon may be filled in the pores by the carbon coating.

That is, since the first composite is uniformly formed in a state in which the first silicon particles are surrounded by a large amount of first carbon and a first carbon layer comprising the first carbon, there are advantages in that a passage of conductivity is sufficient to ensure high conductivity and that the addition of a carbon-based negative electrode active material can be reduced when a negative electrode is manufactured. In addition, the specific surface area of the first composite is appropriately adjusted such that the performance of a lithium secondary battery can be further enhanced.

Meanwhile, the first silicon particles may comprise crystalline particles and may have a crystallite size of 1 nm to 15 nm, preferably, 1 nm to 10 nm, in an X-ray diffraction analysis (converted from the X-ray diffraction analysis results).

If the crystallite size of the first silicon particles is less than the above range, it is difficult to form micropores inside the first composite, it is not possible to suppress a reduction in the Coulombic efficiency, which stands for the ratio of charge capacity to discharge capacity, and the specific surface area is too large, thereby making it impossible to prevent oxidation problems when they are handled in the atmosphere. In addition, if the crystallite size exceeds the above range, the micropores cannot adequately suppress the volume expansion of silicon particles that may take place during charging and discharging, and a reduction in the Coulombic efficiency, which stands for the ratio of charge capacity to discharge capacity, due to repeated charging and discharging cannot be suppressed.

Specifically, when the first composite according to an embodiment is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the first silicon particles may preferably have a crystallite size of 1 nm to 7.5 nm, more preferably, 1 nm to 6 nm.

As the crystallite size of the first silicon particles is made smaller within the above range, a denser composite can be obtained, which can enhance the strength of the matrix. Accordingly, in such a case, the performance of a lithium secondary battery such as discharge capacity, initial efficiency, or cycle lifespan characteristics may be further enhanced.

In addition, the first composite may further comprise amorphous silicon or silicon in a similar phase thereto. Although the first silicon particles have high initial efficiency and battery capacity, it is accompanied by a very complex crystal change by electrochemically absorbing, storing, and releasing lithium atoms.

Meanwhile, the molar ratio (O/Si) of oxygen (O) atoms to silicon (Si) atoms in the first composite may be 0.005 to 0.50, preferably, 0.01 to 0.40, more preferably, 0.01 to 0.30. As the first composite has a molar ratio (O/Si) of oxygen (O) atoms to silicon (Si) atoms satisfying the above range, it may be more advantageous for satisfying the desired molar ratio (O/Si) of oxygen (O) atoms to silicon (Si) atoms in the silicon-carbon mixture. When it is applied to a lithium secondary battery, it is possible to enhance the discharge capacity and initial efficiency, along with an excellent capacity retention rate.

In the first composite, the first carbon may be present on the surface of the first silicon particles. In addition, the first carbon may be present on the surface and/or inside of the first silicon aggregates contained in the first composite.

In addition, the first carbon may serve as a matrix, and the first silicon particles and/or the first silicon aggregates, along with the pores, may be dispersed in the first carbon matrix.

Specifically, the first composite may have a sea-island structure in which the first silicon particles or closed pores (v) form islands and the first carbon forms a sea. The pores comprise open pores and closed pores. The closed pores may comprise pores whose inside is not coated with the first carbon.

In the first composite, the first carbon may be present on the surface of the silicon composite particles comprising the first silicon particles or inside the open pores.

The state in which the first silicon particles or the first carbon are uniformly dispersed is confirmed through image observation of a dark field image or a bright field image by a transmission electron microscope (TEM).

In addition, the first carbon is present on the surface of the first silicon particles or the first silicon aggregates. The first carbon may serve as a matrix, and the first silicon particles and the pores may be dispersed in the first carbon matrix.

In addition, the first composite comprises a silicon composite and a first carbon layer on the surface thereof. The first silicon particles may be present in the silicon composite, and the first carbon may be contained in at least a part of the inside of the first carbon layer and the silicon composite.

In addition, according to an embodiment, the thickness of the first carbon layer or the amount of carbon may be controlled, so that it is possible to achieve appropriate electrical conductivity, as well as to prevent a deterioration of the lifespan characteristics, to thereby achieve a negative electrode active material of high capacity.

In addition, the first composite may further comprise the first silicon oxide ($SiO_x$, $0.1 < x \leq 2$) (also referred to as a first silicon oxide compound).

The first silicon oxide may be formed on the surface of the first silicon particle and/or the silicon aggregate.

In addition, the first silicon oxide may be present uniformly distributed with the first silicon particles.

In addition, the first silicon oxide may be formed on the surface of the first silicon particles and may be uniformly distributed with the first silicon particles or the first silicon aggregates.

The first silicon oxide may be a generic term for an amorphous silicon oxide(oxygen-containing silicon compound) obtained by cooling and precipitation of silicon monoxide gas formed by the oxidation of metal silicon, the reduction of silicon dioxide, or heating a mixture of silicon dioxide and metal silicon.

In $SiO_x$ of the first silicon oxide, x may be $0.4 \leq x \leq 2$, preferably, $0.6 \leq x \leq 1.6$, more preferably, $0.6 \leq x \leq 1.2$.

In the formula $SiO_x$, if the value of x is less than the above range, expansion and contraction may be increased and lifespan characteristics may be deteriorated during the charging and discharging of a lithium secondary battery. In addition, if x exceeds the above range, there may be a problem in that the initial efficiency of a lithium secondary battery is decreased as the amount of inactive oxides increases.

In addition, the first carbon may be present on the surface of the first silicon oxide ($SiO_x$, $0.1 < x \leq 2$).

Meanwhile, in general, as the ratio of oxygen decreases in a negative electrode active material that comprises silicon, the ratio of silicon particles as an active material increases, thereby increasing discharge capacity and discharge efficiency, whereas there may arise a problem in that cracks may be formed in the first composite or the silicon-carbon mixture by the volume expansion caused by the charging and discharging of the silicon particles. As a result, the cycle characteristics of a lithium secondary battery may be deteriorated. In order to solve this problem, silicon dioxide as an inert material or an inert phase may be contained in the first composite.

Specifically, since the silicon dioxide is an inert material or an inert phase, it is effective in mitigating the volume expansion caused by the charging and discharging of silicon particles. The silicon dioxide is a component for forming a matrix in the first composite, which increases the mechanical strength of the matrix of the first composite to make it more robust and is effective in suppressing the formation of cracks even during volume expansion.

Further, as the content of the silicon dioxide is optimized, it is possible to suppress a decrease in the initial capacity and initial efficiency of a lithium secondary battery and to enhance the cycle characteristics by increasing the strength of the matrix.

Specifically, according to an embodiment, the first composite may comprise the silicon dioxide in an amount of 0.3% to 6% by weight, preferably, 0.5% by weight to 6% by weight, more preferably, 0.5% by weight to 5% by weight, even more preferably, 1% by weight to 4% by weight, most preferably from 1% by weight to 3% by weight, based on the total weight of the first composite. If the content of the silicon dioxide is less than the above range, the effect of enhancing the cycle characteristics of a lithium secondary battery may be insignificant. If it exceeds the above range, it may be difficult to achieve the desired molar ratio (O/Si) of oxygen (O) atoms to silicon (Si) atoms in the first composite, and the cycle characteristics or discharge capacity of the lithium secondary battery may be deteriorated.

The content of oxygen (O) in the first composite may be 0.1% by weight to 16% by weight, preferably, 0.1% by weight to 12% by weight, more preferably, 0.1% by weight to 8% by weight, most preferably, 0.1% by weight to 6% by weight, based on the total weight of the first composite.

If the content of oxygen (O) in the first composite is less than the above range, the degree of expansion is increased during the charging of a lithium secondary battery, which deteriorates the cycle characteristics. If the content of oxygen (O) in the first composite exceeds the above range, there may be a concern that an irreversible reaction with lithium increases, which deteriorates the initial charge and discharge efficiency, it may be readily delaminated from the negative electrode current collector, and the charge and discharge cycle of a lithium secondary battery is deteriorated.

Meanwhile, in the first composite, the content of silicon (Si) may be 35% by weight to 80% by weight, preferably, 40% by weight to 80% by weight, more preferably, 50% by weight to 80% by weight, based on the total weight of the first composite. If the content of silicon (Si) in the first composite is less than the above range, the amount of an active material for the occlusion and release of lithium is small, which may reduce the charge and discharge capacity of a lithium secondary battery. On the other hand, if it exceeds the above range, the charge and discharge capacity of a lithium secondary battery may be increased, whereas the expansion and contraction of the electrode during charging and discharging may be excessively increased, and the negative electrode active material powder may be further pulverized, which may deteriorate the cycle characteristics.

In addition, the first composite comprises a silicon composite and a first carbon layer on the surface thereof. The first silicon particles may be present in the silicon composite, and the first carbon may be contained inside the first carbon layer and the silicon composite.

The content of carbon (C) in the first composite may be 10% by weight to 50% by weight based on the total weight of the first composite. Specifically, the content of carbon (C) may be 15% by weight to 45% by weight or 15% by weight to 40% by weight, based on the total weight of the first composite.

If the content of carbon (C) in the first composite is less than the above range, a sufficient effect of enhanced conductivity cannot be expected, and the electrode lifespan of a lithium secondary battery may be deteriorated. In addition, if the content of carbon (C) in the first composite exceeds the above range, the discharge capacity of a lithium secondary battery may decrease, and the charge and discharge capacity per unit volume may be deteriorated.

In addition, carbon (C) may be contained inside the silicon composite. The content of carbon (C) contained inside the silicon composite may be 10% by weight to 45% by weight, preferably, 10% by weight to 40% by weight, more preferably, 15% by weight to 38% by weight, based on the total weight of the first composite. If carbon is contained in the silicon composite in the above content range, sufficient electrical conductivity may be obtained.

In addition, the content of carbon (C) contained in the first composite, particularly, the content of carbon (C) contained in the silicon composite may be affected by porosity.

For example, the first composite may comprise a first composite (1), a first composite (2), or a mixture thereof depending on the porosity.

The first composite (1) may comprise a small amount of pores, and the first composite (2) may comprise a large amount of pores.

Specifically, in the first composite (1) comprising a small amount of pores, the content of carbon (C) contained inside the silicon composite may be increased to 30% by weight to 45% by weight based on the total weight of the first composite. In addition, in the porous first composite (2) comprising a large amount of pores, the content of carbon (C) contained inside the silicon composite may be decreased to 10% by weight to less than 30% by weight based on the total weight of the first composite.

As the content of carbon (C) is adjusted to the optimum ranges in this way, the porosity of the first composite may be controlled. Thus, the silicon-carbon mixture having a controlled porosity can be obtained.

In addition, the porosity of the first composite may be controlled to adjust the content of carbon (C) in the first composite to an optimal range.

The first carbon layer may have a thickness of 2 nm to 100 nm, preferably, 10 nm to 80 nm, more preferably, 10 nm to 60 nm, even more preferably, 10 nm to 40 nm.

If the thickness of the first carbon layer is equal to, or greater than, the above lower limit, an enhancement in conductivity may be achieved. If it is equal to, or less than, the above upper limit, a decrease in the capacity of the lithium secondary battery may be suppressed.

The average thickness of the first carbon layer may be measured by, for example, the following procedure.

First, a composite, a mixture, or a negative electrode active material is observed at an arbitrary magnification by a transmission electron microscope (TEM). The magnification is preferably, for example, a degree that can be confirmed with the naked eye. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

The first carbon layer may comprise at least one selected from the group consisting of amorphous carbon, crystalline carbon, graphene, reduced graphene oxide, a carbon nanotube, and a carbon nanofiber. Specifically, it may comprise graphene. The at least one selected from the group consisting of amorphous carbon, crystalline carbon, graphene, reduced graphene oxide, a carbon nanotube, and a carbon nanofiber may be contained not only in the first carbon layer present on the surface of the silicon composite, but also inside the silicon composite, on the surfaces of the first silicon particles, and in the first carbon matrix.

If the first carbon layer comprises amorphous carbon, the strength of the first carbon layer is properly maintained, so that the expansion of the composite can be suppressed.

The amorphous carbon may comprise at least one selected from the group consisting of soft carbon (low-temperature calcined carbon), hard carbon, pitch carbide, mesophase pitch carbide, and calcined coke.

The raw material of pitch may be, for example, petroleum-based, coal-based, or a mixture thereof. For example, it may be coal tar pitch, petroleum pitch, organic synthetic pitch obtainable by polycondensation of condensed polycyclic aromatic hydrocarbon compounds, or organic synthetic pitch obtainable by polycondensation of heteroatom-containing condensed polycyclic aromatic hydrocarbon compounds. Specifically, the raw material of pitch may be coal tar pitch.

If the first carbon layer is formed using pitch, the conductivity of a negative electrode active material may be enhanced through a simple thermal treatment process by thermally treating and carbonizing the pitch raw material.

In addition, when the first carbon layer comprises crystalline carbon, the conductivity of a negative electrode active material may be improved. The crystalline carbon may be at least one selected from the group consisting of plate-shaped, spherical, and fibrous natural graphite and fibrous artificial graphite.

In addition, first carbon may be formed inside the silicon composite in the same type as the first carbon layer.

Meanwhile, the first carbon layer of the first composite may comprise one or more or two or more carbon layers.

For example, the first carbon layer may have a single-layer structure of one layer or a multi-layer structure of two or more layers. If the first carbon layer is formed of two or more carbon layers, even if cracks are formed on the surface of one of the carbon layers, it is possible to maintain the state in which the carbon layers are electrically connected until the other carbon layer without cracks is completely detached.

Specifically, if the first carbon layer of the first composite comprises a multi-layer of two or more layers, it may comprise a first-first carbon layer and a first-second carbon layer.

The types of the first-first carbon layer and the first-second carbon layer are as described above. Here, the types of the first-first carbon layer and the first-second carbon layer may be different from each other.

For example, the first-first carbon layer may comprise at least one selected from the group consisting of amorphous carbon, crystalline carbon, graphene, a carbon nanotube, and a carbon nanofiber. The first-second carbon layers may comprise reduced graphene oxide (RGO). The reduced graphene oxide may be formed by partially or substantially completely reducing graphene oxide.

The first silicon composite may have an average particle diameter ($D_{50}$) of 2 $\mu$m to 15 $\mu$m, preferably, 4 $\mu$m to 10 $\mu$m, more preferably, 4 $\mu$m to 8 $\mu$m. In addition, the average particle diameter ($D_{50}$) is a value measured as a diameter-averaged particle diameter ($D_{50}$), i.e., a particle size or median diameter when the cumulative volume is 50% in particle size distribution measurement according to a laser beam diffraction method. If the average particle diameter ($D_{50}$) is less than the above range, there is a concern that the dispersibility may be deteriorated due to the aggregation of particles of the first composite during the preparation of a negative electrode active material composition (slurry) using the same. On the other hand, if $D_{50}$ exceeds the above range, the expansion of the composite particles attributed to the charging of lithium ions becomes severe, and the binding capability between the particles of the composite and the binding capability between the particles and the current collector are deteriorated as charging and discharging are repeated, so that the lifespan characteristics may be significantly reduced. In addition, there is a concern that the activity may be deteriorated due to a decrease in the specific surface area.

Meanwhile, since the surfaces of the silicon composite particles or the inside of the silicon composite and the pores therein may be covered by carbon coating, the specific surface area of the first composite may vary significantly.

The first composite may have a specific surface area (Brunauer-Emmett-Teller method; BET) of 2 $m^2$/g to 50 $m^2$/g, preferably, 2 $m^2$/g to 40 $m^2$/g, more preferably, 2 $m^2$/g to 20 $m^2$/g. If the specific surface area of the first composite is less than the above range, the charge and discharge characteristics of a lithium secondary battery may be deteriorated. If it exceeds the above range, it may be difficult to prepare a negative electrode active material composition (slurry) suitable for the application to a negative electrode current collector of a lithium secondary battery, the contact area with an electrolyte increases, and the decomposition reaction of the electrolyte may be accelerated or a side reaction of a lithium secondary battery may be caused.

The first composite may have a density of 1.8 $g/cm^3$ to 2.5 $g/cm^3$, preferably, 2.0 $g/cm^3$ to 2.5 $g/cm^3$, more preferably, 2.0 $g/cm^3$ to 2.4 $g/cm^3$, even more preferably, 2.0 $g/cm^3$ to 2.35 $g/cm^3$. The density may vary depending on the coating amount of the first carbon layer. While the amount of carbon is fixed, the greater the density within the above range, the fewer pores in the first composite. Therefore, when the silicon-carbon mixture comprising the first composite is used as a negative electrode active material, the conductivity is enhanced, and the strength of the matrix is fortified, thereby enhancing the initial efficiency and cycle lifespan characteristics. In such an event, the density may refer to true density. The measurement method is as described above.

If the density of the first composite is within the above range, it is possible to minimize the cracking of a negative electrode active material by reducing the volume expansion of the negative electrode active material during charging and discharging. As a result, a deterioration of cycle characteristics can be prevented, and the impregnability of an electrolyte solution can be enhanced, so that the initial charge and discharge capacity of a lithium secondary battery can be further enhanced.

Meanwhile, the first composite may comprise pores.

In the first composite, a first composite (1) and a first composite (2) having different porosities can be obtained by adjusting the carbon coating method and the carbon coating amount. The carbon coating may be formed by a chemical thermal decomposition deposition (chemical vapor deposition (CVD)) method.

Specifically, the porosities of the first composites (1) and (2) may be controlled by adjusting the etching conditions, for example, an etching solution (etchant), its concentration, etching time, and the like; and/or the carbon coating conditions and carbon coating amount, for example, the type of carbon source, coating temperature, coating time, and the like, in the process for preparing a first composite as described below.

**First composite (1)**

The first composite (1) according to an embodiment may comprise a small amount of pores.

The definition and the method for measuring pores are as described above.

Specifically, the first composite (1) may have an internal porosity of 0.1% to 10%, preferably, 0.1% to 8%, more preferably, 0.1% to 5%. The method for measuring the internal porosity is as described above.

If the internal porosity of the first composite (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance the lifespan characteristics.

If the internal porosity of the first composite (1) is less than the above range, it may be difficult to control the volume expansion of a negative electrode active material during charging and discharging.

Meanwhile, the first composite (1) may have an inner porosity of 0.1% to 8%, preferably, 0.1% to 5%, more preferably, 0.1% to 4%.

If the inner porosity of the first composite (1) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance the lifespan characteristics.

If the internal porosity and/or the inner porosity of the first composite (1) each satisfy the above ranges, it is possible to maintain an excellent capacity retention rate even after cycles of thousands or more for a long period of time, resulting in significant advantages of enhanced reliability.

**First composite (2)**

The first composite (2) according to an embodiment may be porous as it comprises a large amount of pores.

Specifically, the first composite (2) may have an internal porosity of greater than 10% to 40%, preferably, greater than 10 to 30%, more preferably, greater than 10% to 25%.

If the internal porosity of the first composite (2) satisfies the above range, the volume expansion of silicon particles that may take place during the charging and discharging of a lithium secondary battery may be mitigated and suppressed through the pores.

If the internal porosity of the first composite (2) exceeds the above range, the mechanical strength may be reduced due to a large number of pores present in the negative electrode active material, and the negative electrode active material may be collapsed in the process of manufacturing a lithium secondary battery, for example, during the mixing of a negative electrode active material composition (slurry) and the rolling step after coating.

Since the first composite (2) has a porous structure, an electrolyte easily penetrates into the first composite (2), thereby enhancing the charge and discharge characteristics of a lithium secondary battery.

Meanwhile, the first composite (2) may have an inner porosity of 5% to 35%, preferably, greater than 5% to 25%, more preferably, greater than 5% to 20%.

If the inner porosity of the first composite (2) satisfies the above range, it is possible to obtain a buffering effect of volume expansion while sufficient mechanical strength is maintained when it is applied to a negative electrode active material of a lithium secondary battery. Thus, it is possible to minimize the problem of volume expansion attributed to the use of silicon particles, to achieve high capacity, and to enhance the lifespan characteristics.

**<Second composite>**

In the silicon-carbon mixture according to an embodiment, the second composite may comprise second silicon particles, magnesium silicate, and second carbon.

According to an embodiment, as the first composite and the second composite are employed, excellent characteristics of the second composite, such as capacity characteristics (initial capacity) and initial efficiency, can be further enhanced while the problem of the second composite, the deterioration in life characteristics, is solved. In particular, as the silicon-carbon mixture comprises the second composite, the enhancement effect of initial efficiency improvement can be maximized thanks to magnesium silicate, whereby the performance of a lithium secondary battery can be enhanced.

Specifically, the second composite may comprise a silicon composite oxide and a second carbon layer on its surface, the second silicon particles and the magnesium silicate may be present in the silicon composite oxide, and the second carbon may be contained in at least one selected from the group consisting of the second carbon layer, the surface of the second silicon particles, and the surface of the second magnesium silicate.

In addition, the second silicon particles and magnesium silicate may be uniformly distributed inside the silicon composite oxide. In such a case, excellent electrochemical characteristics may be exhibited.

The second silicon particles may comprise crystalline particles, amorphous particles or particles having a phase similar thereto, or a combination thereof.

Specifically, the second silicon particles may comprise crystalline particles and may have a crystallite size of 3 nm to 15 nm in an X-ray diffraction analysis (converted from X-ray diffraction analysis results).

For example, when the second composite is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the second silicon particles may have a crystallite size of, preferably, 4 nm to 15 nm, more preferably, 4 nm to 12 nm, even more preferably, 4 nm to 10 nm, most preferably, 4 nm to 8 nm.

In addition, if the crystallite size of the second silicon particles is less than the above range, initial efficiency, discharge capacity, and capacity retention rate may be steeply deteriorated. If the crystallite size of the second silicon particles satisfies the above range, the Coulombic efficiency, which stands for the ratio of charge capacity to discharge capacity, that is, charge and discharge efficiency, may be enhanced.

In addition, the second silicon particles may be amorphous particles, crystalline particles having a crystallite size of 4 nm to 15 nm, or a mixed form thereof.

Although it may be advantageous that the second silicon particles are amorphous particles of almost 100%, it is difficult to obtain completely amorphous second silicon particles in a process; thus, the second silicon particles may be present in a mixed form of amorphous particles and crystalline particles.

In addition, if the second silicon particles are in a mixed form of amorphous particles and crystalline particles, the ratio of the amorphous particles may be 50% or more.

If the second silicon particles comprise amorphous particles, crystalline particles with a crystallite size in the above range, or a mixture thereof, cracking can be suppressed during the first charging and discharging of a lithium secondary battery.

If some cracks are formed during the first charge and discharge of a lithium secondary battery, these cracks may gradually propagate during repeated charge and discharge cycles, which may cause problems in the performance of the lithium secondary battery.

If the second silicon particles comprise crystalline particles, and if the crystallite size of the second silicon particles is less than the above range, the charge and discharge capacity of a lithium secondary battery may be reduced, and the properties of the material may change during storage due to increased reactivity, which may cause problems in the process.

If the second silicon particles comprise crystalline particles, and if the crystallite size of the second silicon particles is equal to, or greater than, the above lower limit, excellent charge and discharge characteristics of a lithium secondary battery can be maintained. If the crystallite size of the second silicon particles is equal to, or less than, the above upper limit, deterioration in the Coulombic efficiency, which stands for the ratio of charge capacity to discharge capacity of a lithium secondary battery, can be suppressed.

In addition, if the second silicon particles are further pulverized to an amorphous state or a crystallite size of 4 nm to 7 nm, the density may be enhanced and the strength may be fortified to prevent a problem of the formation of cracks. Thus, the initial efficiency or cycle lifespan characteristics of a lithium secondary battery can be further enhanced.

The second composite is a composite in which second silicon aggregates, in which a plurality of second silicon particles are combined with each other, are uniformly distributed in a composite whose structure is in the form of a single mass, for example, a polyhedral, spherical, or similar shape. It may be in a single composite in which a second carbon layer comprising second carbon surrounds a part or all of the surfaces of one or more of the second silicon particles or the surfaces of secondary second silicon particles (second silicon aggregates) formed by the aggregation of two or more of the second silicon particles.

In addition, the content of silicon (Si) in the second composite may be 30% by weight to 60% by weight, 30% by weight to 55% by weight, 35% by weight to 55% by weight, or 35% by weight to 50% by weight, based on the total weight of the second composite.

If the content of silicon (Si) in the second composite satisfies the above range, it is possible to further enhance the charge and discharge capacity and cycle characteristics of a lithium secondary battery.

If the content of silicon (Si) is less than the above range, the charge and discharge capacity of a lithium secondary battery may be deteriorated. If the content of silicon (Si) exceeds the above range, the charge and discharge capacity of a lithium secondary battery may be increased, whereas the contraction and expansion of the electrode during charging and discharging may be excessively increased, and the negative electrode active material powder may be further pulverized, which may deteriorate the cycle characteristics of the lithium secondary battery.

Meanwhile, according to an embodiment, the molar ratio (O/Si) of oxygen (O) atoms to silicon (Si) atoms in the second composite may be 0.8 to 1.2, preferably, 0.85 to 1.2, more preferably, 0.9 to 1.2. When the second composite in which the molar ratio (O/Si) of oxygen (O) atoms to silicon (Si) atoms satisfies the above range is applied to a negative electrode active material, it is possible to enhance the discharge capacity and initial efficiency while an excellent capacity retention rate is maintained.

According to an embodiment, if the molar ratio (O/Si) of oxygen (O) atoms to silicon (Si) atoms in the second composite is outside the above range, the capacity characteristics of a secondary battery may be deteriorated.

Meanwhile, the second composite comprises magnesium silicate.

As the second composite comprises magnesium silicate, slurry stability is excellent when a lithium secondary battery is manufactured, and capacity retention rate, charge and discharge characteristics, and cycle characteristics can be enhanced when it is applied to a lithium secondary battery.

Since magnesium silicate hardly reacts with lithium ions during the charging and discharging of a lithium secondary battery, it is possible to reduce the expansion and contraction of the electrode when lithium ions are occluded in the electrode, thereby enhancing the cycle characteristics of the lithium secondary battery. In addition, the strength of the matrix, which is a continuous phase surrounding the silicon, can be fortified by the magnesium silicate.

The magnesium silicate may be represented by the following Formula A:

$$[\text{Formula A}] \qquad Mg_xSiO_y$$

In Formula A, x is $0.5 \leq x \leq 2$, and y is $2.5 \leq y \leq 4$.

The magnesium silicate may comprise $MgSiO_3$, $Mg_2SiO_4$, or a mixture thereof.

Specifically, the magnesium silicate may comprise at least one selected from $MgSiO_3$ crystals (enstatite) and $Mg_2SiO_4$ crystals (forsterite).

In addition, according to an embodiment, the magnesium silicate may comprise $MgSiO_3$ crystals and may further comprise $Mg_2SiO_4$ crystals.

When the magnesium silicate comprises a mixture of $MgSiO_3$ crystals and $Mg_2SiO_4$ crystals, the ratio of $MgSiO_3$ crystals and $Mg_2SiO_4$ crystals may vary depending on the amount of magnesium employed in the raw material step.

In addition, the magnesium silicate may comprise substantially a large amount of $MgSiO_3$ crystals in order to enhance the Coulombic efficiency, the charge and discharge capacity, initial efficiency, and capacity retention rate.

In the present specification, the phrase "comprising substantially a large amount of" a component may mean to comprise the component as a main component or mainly comprise the component.

Specifically, according to an embodiment, the magnesium silicate comprises $MgSiO_3$ crystals and further comprises $Mg_2SiO_4$ crystals. In such an event, in an X-ray diffraction analysis, the ratio IF/IE of an intensity (IF) of the X-ray diffraction peak corresponding to $Mg_2SiO_4$ crystals appearing in the range of $2\theta = 22.3°$ to $23.3°$ to an intensity (IE) of the X-ray diffraction peak corresponding to $MgSiO_3$ crystals appearing in the range of $2\theta = 30.5°$ to $31.5°$ may be greater than 0 to 1, specifically, 0.1 to 1.

If $MgSiO_3$ crystals are employed in the magnesium silicate in a substantially large amount, the improvement effect of the cycle during charging and discharging may be increased.

If the magnesium silicate comprises $MgSiO_3$ crystals and $Mg_2SiO_4$ crystals together, the initial efficiency may be enhanced. If $Mg_2SiO_4$ crystals are employed more than $MgSiO_3$ crystals, the degree of alloying of silicon with lithium atoms is lowered, whereby the initial discharge characteristics may be deteriorated.

According to an embodiment, if the second composite comprises $MgSiO_3$ crystals and $Mg_2SiO_4$ crystals together, the initial efficiency may be further enhanced.

If the second composite comprises $MgSiO_3$ crystals, the $MgSiO_3$ crystals (e.g., a density of 2.7 g/cm$^3$) have a smaller change in volume based on the change of volume of silicon (e.g., a density of 2.33 g/cm$^3$), as compared with $Mg_2SiO_4$ crystals (e.g., a density of 3.2 g/cm$^3$); thus, the cycle characteristics of a lithium secondary battery can be further enhanced. In addition, the $MgSiO_3$ crystals and $Mg_2SiO_4$ crystals may act as a diluent or inert material in a negative electrode active material. In addition, if $MgSiO_3$ crystals are formed, the pulverization caused by the contraction and expansion of silicon is suppressed, whereby the initial efficiency can be enhanced.

In addition, the magnesium silicate hardly reacts with lithium ions; thus, when it is contained in an electrode, it is possible to reduce the contraction and expansion of the electrode when lithium ions are occluded and to enhance the cycle characteristics.

In addition, the strength of the matrix, which is a continuous phase surrounding the second silicon particles, can be fortified by magnesium silicate.

As the second composite comprises magnesium silicate, a chemical reaction between the negative electrode active material and the binder may be suppressed, slurry stability may be improved, and the stability and cycle characteristics of the negative electrode may be improved together during the manufacture of a lithium secondary battery.

In addition, when the magnesium silicate comprises $MgSiO_3$ crystals and $Mg_2SiO_4$ crystals together, it is

preferable that the MgSiO$_3$ crystals and Mg$_2$SiO$_4$ crystals are uniformly distributed. It is preferable that the crystallite size thereof is 10 nm or less.

When the MgSiO$_3$ crystals and Mg$_2$SiO$_4$ crystals are uniformly distributed, the second silicon particles and the constituent elements of the MgSiO$_3$ crystal and the Mg$_2$SiO$_4$ crystal are diffused with each other, and the phase interface is in a bonded state, that is, each phase is in a bonded state at the atomic level; thus, the change in volume may be small when lithium ions are occluded and released, and cracks may be hardly formed in the negative electrode active material even by repeated charging and discharging. Thus, deterioration in the capacity would hardly take place even with a high number of cycles.

Meanwhile, the content of magnesium (Mg) in the second composite may be 2% by weight to 20% by weight, preferably, 4% by weight to 15% by weight, most preferably, 4% by weight to 12% by weight, based on the total weight of the second composite.

If the content of magnesium (Mg) in the second composite is equal to, or greater than, the above lower limit within the range, the initial efficiency of a lithium secondary battery may be enhanced. If it is equal to, or less than, the above upper limit within the range, it may be advantageous in terms of the enhancement effect of charge and discharge capacity and cycle characteristics and handling stability.

In addition, as the content of magnesium (Mg) increases, the content of Mg$_2$SiO$_4$ crystals may increase. As a result, the crystallite size of magnesium silicate increases, resulting in an excessive increase in initial efficiency and relatively deteriorated cycle characteristics. Thus, it may be important to control the magnesium (Mg) content in an optimal range.

The magnesium silicate may be formed as evenly distributed with the second silicon particles.

Meanwhile, the second composite may comprise a second silicon oxide (also referred to as a second silicon oxide compound).

The second silicon oxide may comprise the same or similar compound as the first silicon oxide.

In addition, the second silicon oxide may be, for example, a silicon-based oxide represented by the formula SiO$_x$ ($0.5 \le x \le 1.5$). The second silicon oxide may be specifically SiO$_x$ ($0.8 \le x \le 1.2$), more specifically SiO$_x$ ($0.9 < x \le 1.1$). In the formula SiO$_x$, if the value of x is less than the above range, expansion and contraction may be increased and lifespan characteristics may be deteriorated during the charging and discharging of a lithium secondary battery. In addition, if x exceeds the above range, there may be a problem in that the initial efficiency of a lithium secondary battery is decreased as the amount of inactive oxides increases.

The second silicon oxide can be obtained by a method comprising mixing and heating a silicon powder and a silicon dioxide powder; and cooling and precipitating a silicon oxide gas produced thereby.

The second silicon oxide may be employed in an amount of 0.1% by weight to 45% by weight, preferably, 0.5% by weight to 20% by weight, based on the total weight of the second composite.

If the content of the second silicon oxide is less than the above range, the volume expansion and lifespan characteristics of a lithium secondary battery may be deteriorated. If it exceeds the above range, the initial irreversible reaction of a lithium secondary battery may increase.

According to an embodiment, the silicon composite oxide of the second composite may comprise a second silicon oxide, and the second silicon particles, magnesium silicate, and the second silicon oxide may be present as uniformly mixed. In addition, the second silicon oxide may be present on the surfaces of the second silicon particles.

When the second composite comprises the second silicon particles, the second silicon oxide, and the magnesium silicate, the change in volume is reduced when lithium ions are occluded and released, and it is possible to prevent the formation of cracks in the negative electrode active material when charging and discharging are repeated. In such a case, since it is possible to prevent a steep decrease in the capacity with respect to the number of cycles of a lithium secondary battery, the cycle characteristics of the lithium secondary battery can be enhanced.

In addition, since the second composite comprises the second silicon particles, the second silicon oxide, and the magnesium silicate, and the second silicon particles are connected and bonded to each other, lithium ions are readily detached during the discharge of a lithium secondary battery; thus, the balance between the amount of charge and discharge of lithium ions is good, and the initial efficiency (charge and discharge efficiency) can be increased.

The second silicon oxide may be employed in an amount of 40% by weight to 50% by weight based on the total weight of the second composite.

If the content of the second silicon oxide is less than the above range, the volume expansion and lifespan characteristics of a lithium secondary battery may be deteriorated. If it exceeds the above range, the initial irreversible reaction of a lithium secondary battery may increase.

The content of oxygen (O) in the second composite may be 20% by weight to 40% by weight, preferably, 25% by weight to 40% by weight, more preferably, 25% by weight to 35% by weight, based on the total weight of the second composite. If the content of oxygen (O) in the second composite is less than the above range, the degree of expansion is increased during the charging of a lithium secondary battery, which deteriorates the cycle characteristics. In addition, if the content of oxygen (O) in the second composite exceeds the above range, the charge and discharge cycle of a lithium secondary battery may be deteriorated.

Meanwhile, according to an embodiment, the second composite may comprise a second carbon layer on the surface of the silicon composite oxide, and the second carbon (C) may be contained in the second carbon layer.

As the second composite comprises the second carbon, it is possible to provide excellent electrical conductivity even after the electrode has been expanded during charging and discharging, so that the performance of a lithium secondary battery can be further enhanced.

In addition, according to an embodiment, the second composite may comprise a silicon composite oxide and a second carbon layer on its surface, the second silicon particles and the magnesium silicate may be present in the silicon composite oxide, and the second carbon may be contained in at least one selected from the group consisting of the second carbon layer, the surfaces of the second silicon particles, and the surface of the second magnesium silicate. In addition, the second carbon may be present on the surface of the second silicon oxide.

Specifically, the second carbon may be contained in the second carbon layer. In addition, the second carbon may be contained by forming a second carbon layer on at least a part of one or more surfaces selected from the group consisting of the second silicon particles, the second magnesium silicate, and the second silicon oxide.

More specifically, the second carbon may be contained in a second carbon layer formed on the surface of the silicon composite oxide. In addition, it may be contained in a second carbon layer formed on at least a part of the surfaces of the second silicon particles, the surfaces of the second silicon oxide particles, and the surfaces of the second magnesium silicate particles.

As the second carbon is contained in the second carbon layer, the mechanical properties may be fortified, excellent electrical conductivity may be secured even after the electrode expands during charging and discharging, and side reactions with the electrolyte are suppressed, so that it is possible to enhance the charge and discharge capacity, initial charge and discharge efficiency, and capacity retention rate of a lithium secondary battery.

In addition, the thickness of the second carbon layer or the amount of carbon may be controlled, so that it is possible to achieve appropriate electrical conductivity, as well as to prevent deterioration of the lifespan characteristics, to thereby achieve a negative electrode active material of high capacity.

In addition, the content of carbon (C) in the second carbon composite may be relatively smaller than the content of carbon (C) in the first composite.

The content of carbon (C) in the second composite may be 3% by weight to 15% by weight, preferably, 3% by weight to 10% by weight, more preferably, 3% by weight to 8% by weight, most preferably, 5% by weight to 8% by weight, based on the total weight of the second composite.

If the content of carbon (C) in the second composite is less than the above range, the thickness of the second carbon layer is too thin, so that the desired effects of the electrical conductivity and the suppression of volume expansion may be insignificant, and an irreversible reaction may take place, resulting in a problem of a significant decrease in discharge capacity. In addition, if the content of carbon (C) in the second composite exceeds the above range, the thickness of the second carbon layer is too thick, so that lithium ions are hardly detached. In such a case, the initial efficiency and discharge capacity of a lithium secondary battery may decrease.

The thickness of the second carbon layer may be 10 nm to 150 nm, preferably, 20 nm to 100 nm, more preferably, 20 nm to 80 nm. If the thickness of the second carbon layer satisfies the above range, it is possible to effectively prevent or alleviate the pulverization of the second composite and to effectively prevent side reactions between the second silicon particles and the electrolyte, thereby further enhancing the performance of a lithium secondary battery.

If the thickness of the second carbon layer is equal to, or greater than, the above lower limit within the range, an enhancement in conductivity may be achieved. If it is equal to, or less than, the above upper limit within the range, a decrease in the capacity of the lithium secondary battery may be suppressed.

The method for measuring the average thickness of the second carbon layer is as described above.

The second carbon layer may comprise at least one selected from the group consisting of amorphous carbon, crystalline carbon, graphene, reduced graphene oxide, a carbon nanotube, and a carbon nanofiber. Specifically, the second carbon layer may comprise at least one selected from the group consisting of amorphous carbon and crystalline carbon. The type of the second carbon layer is as described for the first carbon layer.

The second carbon layer may comprise one or more carbon layers.

When the second composite comprises a second carbon layer of one or more layers, each carbon layer may be formed thinly and uniformly along the entire outer shape of the carbon layer while the outer shape of the carbon layer is maintained. A part or most of the second carbon layer may surround the entire surface of the silicon composite oxide. In such an event, when the second carbon layer is formed thinly and uniformly on the surface of the silicon composite oxide, the electrical contact between particles contained in the second composite or the negative electrode active material may be enhanced.

Specifically, if the second carbon layer of the second composite comprises a multilayer of two or more layers, it may comprise a second-first carbon layer and a second-second carbon layer.

The types of the second-first carbon layer and the second-second carbon layer are as described above. Here, the types of the second-first carbon layer and the second-second carbon layer may be different from each other.

The second composite may have an average particle diameter ($D_{50}$) of 2 μm to 15 μm, preferably, 3 μm to 12 μm, more preferably, 4 μm to 10 μm, even more preferably, 4 μm to 7 μm, most preferably, 4 μm to 6 μm.

If the average particle diameter ($D_{50}$) is less than the above range, the dispersibility may be deteriorated due to the aggregation of particles of the second composite during the preparation of a negative electrode slurry (negative electrode active material composition) using the same. On the other hand, if $D_{50}$ exceeds the above range, the expansion of the composite particles attributed to the charging of lithium ions becomes severe, and the binding capability between the particles of the composite and the binding capability between the particles and the current collector are deteriorated as charging and discharging are repeated, so that the lifespan characteristics may be significantly reduced, and the activity may be deteriorated by a decrease in the specific surface area.

In addition, according to an embodiment, the second composite may have a composite structure in which the second silicon particles, the second silicon oxide, and the magnesium silicate are contained at the same time while these components are uniformly dispersed. In addition, each component or its particle size contained in the second composite may be adjusted within a specific range. If the size of each of the second silicon particles, the second silicon oxide, and the magnesium silicate particles is too large, there may be a problem in that the desired function as the second composite cannot be sufficiently exhibited.

Meanwhile, the second composite may have a specific surface area (Brunauer-Emmett-Teller method; BET) of 3 $m^2$/g to 20 $m^2$/g, preferably, 3 $m^2$/g to 15 $m^2$/g, more preferably, 3 $m^2$/g to 10 $m^2$/g. If the specific surface area of the second composite is less than the above range, the output characteristics of a lithium secondary battery may be deteriorated. If it exceeds the above range, it may be difficult to prepare a negative electrode active slurry suitable for the application to a negative electrode current collector of a lithium secondary battery, the contact area with an electrolyte increases, and the decomposition reaction of the electrolyte may be accelerated or a side reaction of a lithium secondary battery may be caused.

The second composite may have a density of 1.8 $g/cm^3$ to 2.5 $g/cm^3$, preferably, 2.0 $g/cm^3$ to 2.5 $g/cm^3$, more preferably, 2.0 $g/cm^3$ to 2.4 $g/cm^3$. The density may vary according to the coating amount of the second carbon layer. In such an event, the density may refer to true density. The measurement method is as described above.

If the density of the second composite satisfies the above range, the impregnability of the electrolyte is enhanced, whereby it is possible to further enhance the initial charge and discharge capacity and lifespan characteristics of a lithium secondary battery.

Meanwhile, according to an embodiment, the second composite may comprise silicates containing other metals in addition to magnesium. The other metals may be at least one selected from the group consisting of alkali metals, alkaline earth metals, Groups 13 to 16 elements, transition metals, rare earth elements, and combinations thereof. Specific examples thereof may include Li, Ca, Sr, Ba, Y, Ti, Zr, Hf, V, Nb, Cr, Mo, W, Fe, Pb, Ru, Ir, Pd, Pt, Cu, Ag, Au, Zn, Cd, B, Al, Ga, Sn, In, Ge, P, As, Sb, Bi, S, and Se.

A lithium secondary battery using the second composite in a negative electrode may further enhance its discharge capacity, initial efficiency, and capacity retention rate.

According to an embodiment, the silicon-carbon mixture, specifically, the silicon-carbon mixtures (1) and (2) having desired physical properties may each be obtained by appropriately selecting and adjusting at least one of the first composites (1) and (2), as the first composite, and the second composite.

For example, the silicon-carbon mixture may comprise the first composite (1) and the second composite.

Alternatively, the silicon-carbon mixture may comprise the first composite (2) and the second composite.

Alternatively, the silicon-carbon mixture may comprise the first composite (1), the first composite (2), and the second composite.

**[Process for preparing a silicon-carbon mixture]**

The process for preparing a silicon-carbon mixture according to an embodiment comprises a first step of obtaining a first composite; a second step of obtaining a second composite; and a third step of mixing the first composite and the second composite, wherein the first composite comprises first silicon particles and first carbon, and the second composite comprises second silicon particles, magnesium silicate, and second carbon.

According to the process for preparing a silicon-carbon mixture, the etching conditions and carbon coating conditions can be adjusted in various ways, whereby it is possible to variously adjust and optimize the molar ratio (O/Si) of oxygen (O) atoms to silicon (Si) atoms in the silicon-carbon mixture and the physical properties thereof such as specific surface area, density, and porosity. Thus, it is possible to further enhance the performance of a lithium secondary battery and to further enhance reliability.

In addition, the preparation process has an advantage in that mass production is possible through a continuous process with minimized steps.

**First step of obtaining a first composite**

First, the process for preparing a silicon-carbon mixture comprises a first step of obtaining a first composite comprising first silicon particles and first carbon.

The first step of obtaining a first composite may comprise a first-first step of etching a first silicon-based raw material powder using an etching solution containing a fluorine (F) atom-containing compound; a first-second step of obtaining a silicon composite by filtering and drying the product obtained by the etching; and a first-third step of forming first carbon inside the silicon composite and a first carbon layer on the surface of the silicon composite using a chemical thermal decomposition deposition method to obtain a first composite.

The first-first step may comprise etching a first silicon-based raw material powder using an etching solution containing a fluorine (F) atom-containing compound.

The first silicon-based raw material powder may comprise a powder comprising silicon capable of reacting with lithium, for example, a powder comprising at least one of silicon, silicon oxide, and silicon dioxide.

Specifically, the first silicon-based raw material powder may comprise, for example, at least two selected from silicon, silicon oxide, and silicon dioxide. Specifically, the first silicon-based raw material powder may comprise a lower silicon oxide powder represented by the Formula of $SiO_x$ ($0.9 \leq x < 1.2$).

The first silicon-based raw material powder may be amorphous or crystalline $SiO_x$ (crystal size of silicon: about 2 nm to 3 nm) prepared by a gas phase method. The average particle diameter, as a median diameter, of the first silicon-based raw material powder may be about 0.5 $\mu$m to 30 $\mu$m, preferably, 0.5 $\mu$m to 25 $\mu$m, more preferably, 0.5 $\mu$m to 10 $\mu$m.

If the average particle diameter of the first silicon-based raw material powder is less than the above range, the volume density may be too small, which deteriorates the charge and discharge capacity per unit volume. If the average particle diameter of the first silicon-based raw material powder exceeds the above range, it may be difficult to fabricate an electrode, or it may be delaminated from the current collector. The average particle diameter may be $D_{50}$ (i.e., particle diameter when the cumulative weight is 50%) in particle size distribution measurement by laser light diffraction.

In addition, the process may further comprise forming a carbon layer on the surface of the first silicon-based raw material powder by using a chemical thermal decomposition deposition method. Thus, a first silicon-based raw material powder on which a carbon layer has been formed may be used as the silicon-based raw material powder.

Specifically, once a carbon layer has been formed on the surface of the first silicon-based raw material powder comprising the silicon particles, the etching step of the first-first step may be carried out. In such a case, there may be an advantage in that uniform etching is possible, and a high yield may be obtained.

The step of forming a carbon layer may be carried out by a process similar or identical to the process of forming a first carbon layer in the first-third step of the process for preparing a first composite to be described below.

The etching step may comprise dry etching and wet etching.

If dry etching is used, selective etching may be possible.

Silicon oxide of the first silicon-based raw material powder is dissolved and eluted by the etching step to thereby form pores.

In addition, pores may be considered to be formed by, for example, the following Reaction Schemes 2 and 3.

[Reaction Scheme 2] $\quad$ $SiO_2 + 4HF \text{ (gas)} \rightarrow SiF_4 + 2H_2O$

[Reaction Scheme 3] $\quad$ $SiO_2 + 6HF \text{ (aq. solution)} \rightarrow H_2SiF_6 + 2H_2O$

Pores (voids) may be formed where silicon dioxide is dissolved and removed in the form of $SiF_4$ and $H_2SiF_6$ by the reaction mechanism as in the above reaction schemes.

In addition, silicon oxide, for example, silicon dioxide, contained in the first composite may be removed depending on the degree of etching, and pores may be formed therein.

The degree of formation of pores may vary with the degree of etching.

In addition, the ratio of O/Si and the specific surface area of the silicon composite upon etching may significantly vary, respectively. In addition, the specific surface area and the density of the silicon composite in which pores are formed may significantly vary before and after the coating of carbon.

It is possible to obtain a silicon composite powder having a plurality of pores formed on the surface of the silicon composite particles, or on the surface and inside thereof, through the etching.

Here, etching refers to a process in which the first silicon-based raw material powder is treated with an etching solution containing a fluorine (F) atom-containing compound.

A commonly used etching solution containing a fluorine atom may be used without limitation within a range that does not impair the effects as the etching solution containing a fluorine (F) atom-containing compound.

Specifically, the fluorine (F) atom-containing compound may comprise at least one selected from the group consisting of HF, $NH_4F$, and $HF_2$. As the fluorine (F) atom-containing compound is used, the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The silicon composite obtained upon the etching may comprise first silicon particles.

It is possible to obtain a silicon composite having a plurality of pores formed on the surface, inside, or both of the silicon composite particles through the etching. Here, the silicon composite may have a three-dimensional (3D) structure in which two or more of the first silicon particles are combined with each other.

In addition, it is characterized in that the average particle diameter of the silicon composite hardly changes by etching.

That is, the average particle diameter of the first silicon-based raw material powder before etching and the average particle diameter of the silicon composite obtained by etching are approximately the same. The difference (change) in the average particle diameter of the first silicon-based raw material powder and that of the silicon composite may be within about 5%.

In addition, the number of oxygen present on the surface of the silicon composite may be lowered by the etching. That is, it is possible to significantly lower the oxygen fraction on the surface of the silicon composite and to reduce the surface resistance through the etching. In such a case, the electrochemical characteristics, particularly, the lifespan characteristics of a lithium secondary battery may be further enhanced.

In addition, as the selective etching removes a large amount of silicon oxide (silicon dioxide), the first silicon particles may comprise silicon (Si) in a very high fraction as compared with oxygen (O) on their surfaces. That is, the molar ratio of oxygen (O) atoms to silicon (Si) atoms (O/Si) present in the silicon composite may be significantly reduced. In such an event, it is possible to obtain a lithium secondary battery having an excellent capacity retention rate and enhanced discharge capacity and initial efficiency.

In addition, pores or voids can be formed at the locations where silicon oxide (silicon dioxide) is removed. As a result, the specific surface area of the silicon composite may be increased as compared with the specific surface area of the first silicon-based raw material powder before etching.

According to an embodiment, physical properties such as element content and specific surface area may vary before and after the etching step. That is, physical properties such as element content and specific surface area of the first silicon-based raw material powder before the etching step and the silicon composite after the etching step may differ.

Here, the silicon composite and the second silicon composite after the etching step and before the carbon coating have a porous structure unless otherwise specified.

The internal porosity of the silicon composite upon the etching step may be 10% to 50%, preferably, 15% % to 50%, more preferably, 20% to 50%.

If the internal porosity of the silicon composite satisfies the above range, it may be more advantageous for achieving the desired effects.

In the process for preparing a first silicon composite, the first-second step may comprise filtering and drying the product obtained by the etching to obtain a silicon composite. The filtration and drying step may be carried out by a commonly used method.

In the process for preparing a first composite, the first-third step may comprise forming first carbon inside the silicon composite and a first carbon layer on the surface of the silicon composite by using a chemical thermal decomposition deposition method to prepare a first composite.

The first carbon layer may comprise at least one selected from the group consisting of amorphous carbon, crystalline carbon, graphene, reduced graphene oxide, a carbon nanotube, and a carbon nanofiber.

The step of forming first carbon inside the silicon composite and a first carbon layer on the surface of the silicon composite may be carried out by injecting at least one carbon source gas selected from a compound represented by the following Formulae 1 to 3 and carrying out a reaction of the silicon composite obtained in the first-second step in a gaseous state at 400°C to 1,200°C.

[Formula 1] $C_NH_{(2N + 2-A)}[OH]_A$

in Formula 1, N is an integer of 1 to 20, and A is 0 or 1,

[Formula 2] $C_NH_{(2N-B)}$

in Formula 2, N is an integer of 2 to 6, and B is an integer of 0 to 2,

[Formula 3] $C_xH_yO_z$

in Formula 3, x is an integer of 1 to 20, y is an integer of 0 to 25, and z is an integer of 0 to 5.

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxy toluene (BHT).

The carbon source gas may further comprise at least one inert gas selected from hydrogen, nitrogen, helium, and argon.

The reaction may be carried out, for example, at 400°C to 1,200°C, specifically, 500°C to 1, 100°C, more specifically, 600°C to 1,000°C.

The reaction time (or thermal treatment time) may be appropriately adjusted depending on the thermal treatment temperature, the pressure during the thermal treatment, the composition of the gas mixture, and the desired amount of carbon coating. For example, the reaction time may be 10 minutes to 100 hours, specifically, 30 minutes to 90 hours, more specifically, 50 minutes to 40 hours, but it is not limited thereto.

According to the process for preparing a first composite according to an embodiment, a thin and uniform first carbon layer may be formed on the surface of the silicon composite even at a relatively low temperature through a vapor phase reaction of the carbon source gas. In addition, the detachment reaction in the first carbon layer thus formed does not substantially take place.

In addition, since a first carbon layer is uniformly formed over the entire surface of the silicon composite through the gas-phase reaction using a chemical thermal decomposition deposition method, a carbon film (carbon layer) having high crystallinity can be formed.

In addition, carbon can be coated (embedded) in a plurality of pores formed by the etching of the first-first step and/or the first-second step through the vapor phase reaction using a chemical thermal decomposition deposition method, so that the porosity of the first composite and the silicon-carbon mixture can be controlled, and the desired effects can be achieved.

Thus, when a silicon-carbon mixture comprising the first composite is used as a negative electrode active material, the electrical conductivity of the negative electrode active material can be enhanced without changing the structure.

According to an embodiment, when a reaction gas containing the carbon source gas and an inert gas is supplied to the silicon composite, the reaction gas may penetrate into the pores of the silicon composite, whereby first carbon is sufficiently formed (coated or embedded) inside the silicon composite, and a first carbon layer is formed on the surface of the silicon composite. As a result, a negative electrode active material may be enhanced in conductivity.

The specific surface area of the first composite may decrease with respect to the amount of carbon coating.

In addition, the porosity of the first composite, and furthermore, the porosity of the silicon-carbon mixture may be controlled as desired by adjusting the etching conditions and/or the carbon coating conditions. That is, as carbon penetrates and fills the pores of the silicon composite, and as a carbon layer is formed on the surface of the silicon composite, the first composite, specifically, the first composite (1) and the first composite (2) with controlled porosity can be obtained. The porosity of the silicon-carbon mixture can be optimized according to the characteristics required for a lithium secondary battery by this method.

The structure of the graphene-containing material may be a layer, a nanosheet type, or a structure in which several flakes are mixed.

If a first carbon layer comprising a graphene-containing material is uniformly formed over the entire surface of the silicon composite, it is possible to suppress volume expansion as a graphene-containing material that has enhanced conductivity and is flexible for volume expansion is directly grown on the surface of the first silicon particles. In addition, the coating of a first carbon layer may reduce the chance that silicon directly meets the electrolyte, thereby reducing the formation of a solid electrolyte interphase (SEI) layer.

Meanwhile, after a lot of pores formed after the etching are coated with carbon, the first carbon may be inserted into the surface and internal pores of the first composite.

The porosity of the first composite after the carbon coating is as described above.

In addition, according to an embodiment, after the first-third step (in which first carbon is formed inside the silicon composite in the step first-third, and a first carbon layer is formed on the surface of the silicon composite), one or more of the first composites may be combined with each other to form an aggregate. It may further comprise pulverizing and classifying the first composite such that the average particle diameter of the first composite is 2 μm to 15 μm. The classification may be carried out to adjust the particle size distribution of the first composite, for which dry classification, wet classification, or classification using a sieve may be used. In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out pulverization and classification of the first composite at one time. After the pulverization, it is effective to divide the coarse powder part and the granular part with a classifier or sieve.

**Second step of obtaining a second composite**

The process for preparing a silicon-carbon mixture according to an embodiment comprises a second step of obtaining a second composite comprising second silicon particles, magnesium silicate, and second carbon.

The process for obtaining a second composite comprises a second-first step of obtaining a silicon composite oxide by using a second silicon-based raw material and a magnesium-based raw material; a second-second step of pulverizing and/or classifying the silicon composite oxide to obtain a silicon composite oxide powder; and a second-third step of forming a second carbon layer on the surface of the silicon composite oxide powder using a chemical thermal decomposition deposition method to obtain a second composite.

The process for preparing a second composite has an advantage in that mass production is possible through a continuous process with minimized steps.

Specifically, in the process for preparing a second composite, the second-first step may comprise obtaining a silicon composite oxide by using a silicon-based raw material and a magnesium-based raw material. The second-first step may be carried out by, for example, using the method described in Korean Laid-open Patent Publication No. 2018-0106485.

In addition, the second silicon-based raw material may be the same as, or similar to, the first silicon-based raw material.

The silicon composite oxide may comprise magnesium silicate.

Specifically, the second silicon-based raw material and the magnesium-based raw material may be heated to be evaporated at different temperatures, which may be then deposited and cooled to obtain a silicon composite oxide.

The second silicon-based raw material powder may comprise at least one selected from silicon, silicon oxide, and silicon dioxide.

The magnesium-based raw material may comprise metallic magnesium.

Meanwhile, the average particle diameter of the second silicon-based raw material is not limited. For example, the average particle diameter of the silicon powder may be 5 $\mu$m to 50 $\mu$m, 10 $\mu$m to 40 $\mu$m, or 15 $\mu$m to 30 $\mu$m, and the average particle diameter of the silicon dioxide powder may be 5 nm to 50 nm, 10 nm to 40 nm, or 15 nm to 30 nm.

If a second silicon-based raw material having an average particle diameter within the above range is used, the deposition and evaporation of silicon dioxide become uniform, whereby fine second silicon particles can be obtained.

The second silicon-based raw material and the magnesium-based raw material may each be put into crucibles in a vacuum reactor and heated to be evaporated at different temperatures, which may be then deposited and cooled to obtain a silicon composite oxide.

The heating and evaporation of the second silicon-based raw material may be carried out at 900°C to 1,800°C, preferably, 1,000°C to 1,600°C, more preferably, 1,200°C to 1,600°C, under a pressure of 0.0001 Torr to 2 Torr. If the temperature is lower than the above range, it may be difficult for the reaction to be carried out, thereby lowering productivity. If it exceeds the above range, the reactivity may be reduced.

The heating and evaporation of the magnesium-based raw material may be carried out at 500°C to 1,100°C, 600°C to 1,000°C, or 650°C to 900°C, under a pressure of 0.0001 Torr to 2 Torr.

If the heating and evaporation of the second silicon-based raw material and the magnesium-based raw material satisfy the above ranges, fine second silicon particles and fine magnesium silicate particles may be produced, whereby a silicon oxide (silicon oxide compound) having a desired $SiO_x$ ($0.4 \leq x \leq 2$) composition may be obtained.

Meanwhile, the deposition may be carried out at 300°C to 800°C, preferably, 400°C to 700°C.

The cooling may be carried out by rapidly cooling to room temperature by water cooling. In addition, it may be carried out at room temperature while an inert gas is injected. The inert gas may be at least one selected from carbon dioxide gas, argon (Ar), helium (He), nitrogen ($N_2$), and hydrogen ($H_2$).

The second silicon-based raw material and the magnesium-based raw material are heated and evaporated and then deposited onto a substrate in a reactor to synthesize a silicon composite oxide through a uniform vapor-phase reaction of particles; thus, it is possible to prevent the rapid growth of the second silicon due to an exothermic reaction as magnesium is locally mixed in excess as in a solid-state reaction.

Meanwhile, it may further comprise thermal treatment of the silicon composite oxide.

The thermal treatment may be carried out at 700°C to 950°C. Specifically, the thermal treatment may be carried out at 800°C to 950°C, preferably, 900°C to 930°C, for 1 to 10 hours or 1 to 5 hours.

The second-second step according to an embodiment may further comprise pulverizing and/or classifying the silicon composite oxide obtained in the second-first step to have an average particle diameter of 3 μm to 15 μm.

More specifically, the silicon composite oxide obtained in the second-first step may be pulverized, and the pulverization may be carried out such that the average particle diameter ($D_{50}$) of the thermally treated silicon composite oxide is 3 μm to 10 μm, specifically, 3 μm to 8 μm.

For the pulverization, a pulverizing apparatus well known in the art may be used. For example, the pulverization may be carried out using at least one selected from the group consisting of a jet mill, a ball mill, a stirred media mill, a roll mill, a hammer mill, a pin mill, a disk mill, a colloid mill, and an atomizer mill.

Specifically, the pulverization may be carried out using a ball mill or a stirred media mill that moves a pulverizing medium, such as balls and beads, to pulverize the object to be pulverized by using an impact, friction, or compressive force supplied by the kinetic energy, or a roll mill that performs pulverization using a compressive force by a roller. In addition, a jet mill may be used, which causes the object to be pulverized to collide with the interior material or to collide with each other at a high speed, to perform pulverization by an impact force supplied by the collision. In addition, a hammer mill, a pin mill, or a disc mill may be used. In addition, a colloid mill using a shear force or an atomizer mill as a high-pressure wet opposing impact type disperser may be used.

In addition, the classification may be carried out using at least one selected from dry classification, wet classification, and sieve classification.

According to an embodiment, a dry classification equipped with a cyclone together with a jet mill may be used.

In the jet mill, the processes of dispersion, separation (separation of fine particles and coarse particles), collection (separation of solids and gases), and discharge may be sequentially carried out using an air stream. In such a case, the classification efficiency should not be impaired by the impact of interference between particles, particle shape, disturbance of air stream, velocity distribution, and static electricity.

That is, the air stream may be pretreated (for adjustment of moisture, dispersibility, humidity, and the like) before classification to adjust the concentration of moisture and oxygen.

In addition, a desired particle size distribution may be achieved by carrying out pulverization and classification at one time.

In the process for preparing a second composite, the second-third step may comprise forming a second carbon layer on the surface of the silicon composite oxide powder using a chemical thermal decomposition deposition method to obtain a second composite.

The second carbon layer may be formed on the surface of at least one particle selected from the group consisting of second silicon particles, magnesium silicate (particles), and second silicon oxide (particles) constituting the silicon composite oxide powder, in addition to the surface of the silicon composite oxide powder.

The second carbon layer may comprise at least one selected from the group consisting of amorphous carbon, crystalline carbon, graphene, reduced graphene oxide, a carbon nanotube, and a carbon nanofiber.

The step of forming of a second carbon layer may be carried out in the same manner as the first-third step.

In addition, according to an embodiment, it may further comprise, after the second-third step (after the formation of a second carbon layer in the second-third step), pulverizing and classifying the second composite such that the second composite has a desired average particle diameter. The pulverization and classification step is as described above.

**Third step**

The process for preparing a silicon-carbon mixture comprises a third step of mixing the first composite and the second composite.

The mixing weight ratio of the first composite and the second composite may be 90: 10 to 5:95, 90: 10 to 10:90, 90: 10 to 20:80, 90: 10 to 60:40, 90: 10 to 65:35, or 90: 10 to 70:30. If the mixing weight ratio of the first composite and the second composite satisfies the above range, the molar ratio (O/Si) of oxygen (O) atoms to silicon (Si) atoms in the silicon-carbon mixture can be optimized. As a result, a silicon-carbon mixture having desired properties can be achieved.

If the mixing weight ratio of the first composite and the second composite is outside the above range, it is difficult to achieve the desired effects, and, in particular, the cycle characteristics of a lithium secondary battery may be deteriorated.

The mixing may be carried out by at least one method selected from dry mixing and wet mixing.

According to an embodiment, the mixing may be carried out using, for example, a co-rotational mixer to prepare a powder containing mixed-phase particles. The rotational speed during the mixing may be 1,000 to 3,000 rpm, for example, about 2,000 rpm, and the mixing time may be 2 minutes to 20 minutes, preferably, 3 minutes to 10 minutes, more preferably, 5 minutes to 8 minutes, for example, about 6 minutes. If the mixing speed and mixing time are within the above ranges, the first composite and the second composite may be efficiently and homogeneously mixed.

Meanwhile, according to an embodiment, the silicon-carbon mixture may be prepared by a preparation process, which comprises mixing the silicon composite obtained in the first-second step and the silicon composite oxide powder obtained in the second-second step to prepare a silicon composite mixture; and forming a carbon layer on the silicon composite mixture.

In the silicon composite mixture, the mixing weight ratio of the silicon composite obtained in the first-second step and the silicon composite oxide powder obtained in the second-second step may be 90:10 to 5:95, 90:10 to 10:90, 90:10 to 20:80, 90:10 to 60:40, 90:10 to 65:35, or 90:10 to 70:30. If the mixing weight ratio of the silicon composite mixture satisfies the above range, the molar ratio (O/Si) of oxygen (O) atoms to silicon (Si) atoms in the silicon-carbon mixture can be optimized. As a result, a silicon-carbon mixture having desired properties can be achieved.

In addition, the step of forming a carbon layer on the silicon composite mixture may be carried out in a manner the same as, or similar manner to, the first-third step. The process may further comprise a step of pulverizing the powder obtained after forming a carbon layer (pulverization step). The pulverization step is as described above.

**Negative electrode active material**

The negative electrode active material according to an embodiment may comprise the silicon-carbon mixture.

In addition, the negative electrode active material may further comprise a carbon-based negative electrode material, specifically, a graphite-based negative electrode material.

When the negative electrode active material is used as a mixture of the silicon-carbon mixture and the carbon-based negative electrode material, for example, a graphite-based negative electrode material, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material may be 5% by weight to 70% by weight, preferably, 10% by weight to 60% by weight, more preferably, 10% by weight to 50% by weight, based on the total weight of the negative electrode active material.

In addition, if silicon particles having a crystallite size of 20 nm or less, for example, 15 nm or less, are used as mixed with graphite-based materials generally having low volume expansion, only the silicon particles do not cause large volume expansion; thus, a lithium secondary battery with excellent cycling characteristics can be obtained.

**Lithium secondary battery**

According to an embodiment, there is provided a negative electrode comprising the negative electrode active material and a lithium secondary battery comprising the same.

The lithium secondary battery may comprise a positive electrode, a negative electrode, a separator interposed between the positive electrode and the negative electrode, and a non-aqueous liquid electrolyte in which a lithium salt is dissolved. The negative electrode active material may comprise a negative electrode active material comprising a silicon-carbon mixture.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may each further comprise a conductive agent and a binder (binding agent).

Materials known in the art may be used as a material constituting the negative electrode current collector and a material constituting the positive electrode current collector. Materials known in the art may be used as a binder and a conductive material added to the negative electrode and the positive electrode.

If the negative electrode is composed of a current collector and an active material layer supported thereon, the negative electrode may be prepared by coating the negative electrode active material composition comprising the silicon-carbon mixture on the surface of the current collector and drying it.

In addition, the lithium secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The lithium secondary battery may comprise a non-aqueous lithium secondary battery.

The negative electrode active material and the lithium secondary battery using the silicon-carbon mixture according to an embodiment can enhance charge and discharge capacity, as well as initial charge and discharge efficiency

and capacity retention rate.

**Mode for the Invention**

Hereinafter, the present invention will be described in detail with reference to examples. The following examples are only illustrative of the present invention, and the scope of the present invention is not limited thereto.

**<Preparation of a first composite>**

**Preparation Example 3-1**

(1) Step 1-1: 50 g of the silicon oxide ($SiO_x$, x = 0.9) powder, which is an silicon oxide(oxygen-containing silicon compound) (Preparation Example 1-1) prepared by vapor deposition using a silicon powder and a silicon dioxide powder and having physical properties shown in Table 1 below, was dispersed in water. While it was stirred at a speed of 300 rpm, 50 ml of an aqueous HF solution of 40% by weight was added as an etching solution to carry out etching the silicon-based raw material (first silicon-based raw material) powder for 1 hour. (2) Step 1-2: The product obtained by the above etching was filtered and dried at 150°C for 2 hours to prepare a dried composite. Then, in order to control the particle size of the composite, it was crushed using a mortar to have an average particle diameter of 4.5 $\mu$m, to thereby prepare a porous silicon composite (Preparation Example 2-1) having the content of each component and physical properties as shown in Table 2 below.

(3) Step 1-3: 10 g of the porous silicon composite was placed inside a tubular electric furnace, and argon (Ar) and methane gas were flowed at a rate of 1 liter/minute, respectively. It was maintained at 900°C for 1 hour and then cooled to room temperature, thereby forming first carbon inside the silicon composite and a first carbon layer on the surface of the silicon composite, whereby a first silicon-carbon composite having the content of each component and physical properties as shown in Table 3 below was prepared.

(4) Step 1-4: In order to control the particle size of the first silicon-carbon composite, it was pulverized and classified to have an average particle diameter of 5.0 $\mu$m by a mechanical method, thereby preparing a first composite having the content of each component and physical properties as shown in Table 3 below.

**Preparation Examples 3-2 to 3-7**

First composites (Preparation Examples 3-2 to 3-7) having the content of each component and the physical properties of the composites shown in Table 3 below were each prepared in the same manner as in Preparation Example 3-1, except that the porous silicon composites (Preparation Examples 2-2 to 2-5) having the content of each component and physical properties as shown in Table 2 below were each used to adjust the content of each component and the physical properties of the composites.

**Preparation Examples 3-8 to 3-10**

First composites (Preparation Examples 3-8 to 3-10) having the content of each component and the physical properties of the composites shown in Table 3 below were each prepared in the same manner as in Preparation Example 3-1, except that the porous silicon composites (Preparation Examples 2-2 to 2-5) having the content of each component and physical properties as shown in Table 2 below were each used to adjust the content of each component and the physical properties of the composites and that 10 g of the porous silicon composite was placed inside a tubular electric furnace, and argon (Ar) and ethylene gas were flowed at a rate of 0.5 liter/minute, respectively, which was maintained at 750°C for 2 hours and then cooled to room temperature, thereby forming first carbon inside the silicon composite and a first carbon layer on the surface of the silicon composite.

**<Preparation of a second composite>**

**Preparation Example 4-1**

(1) Step 2-1: 8 kg of a silicon powder with an average particle size of 20 $\mu$m and 16 kg of a silicon dioxide powder with an average particle size of 20 nm were added to 50 kg of water, which was stirred for 12 hours to homogeneously mix them and then dried at 200°C for 24 hours to obtain a raw material powder mixture.

The raw material powder mixture and 2 kg of metallic magnesium were put into crucible-A and crucible-B in a vacuum reactor, respectively. After the pressure was lowered to reach 0.1 Torr, the temperature of crucible-A was raised to 1,500°C, and the temperature of crucible-B was raised to 900°C, followed by a reaction for 5 hours.

The silicon composite oxide mass deposited onto the substrate inside the reactor through the reaction in the high-temperature gas phase was quickly cooled to room temperature by a water-cooled substrate.

(2) Step 2-2: The silicon composite oxide mass was pulverized by a mechanical method to control the particle size to obtain a silicon composite oxide powder having an average particle diameter of 6 μm.

(3) Step 2-3: 50 g of the silicon composite oxide powder was placed inside a tubular electric furnace, and argon (Ar) and methane gas were flowed at a rate of 1 liter/minute, respectively, which was maintained at 900°C for 1 hour, thereby preparing a second composite (Preparation Example 4-1) having the content of each component and the physical properties of the composites as shown in Table 4 below.

**Preparation Example 4-2**

A second composite (Preparation Example 4-2) was prepared in the same manner as in Preparation Example 4-1, except that the content of each component and the physical properties of the composite were adjusted as shown in Table 4 below.

**Example 1**

**Preparation of a silicon-carbon mixture**

The first composite of Preparation Example 3-1 and the second composite of Preparation Example 4-1 were mixed at a weight ratio of 90: 10. Here, the mixing was carried out using a co-rotational mixer (THINKY MIXER) to prepare a powder containing mixed-phase particles composed of the first composite and the second composite. The mixing was carried out at a rotational speed of about 2,000 rpm for a mixing time of about 6 minutes. The physical properties of the silicon-carbon mixture thus prepared are shown in Tables 5 and 7 below.

**Fabrication of a lithium secondary battery**

A negative electrode and a battery (coin cell) comprising the silicon-carbon mixture as a negative electrode active material were each prepared.

The negative electrode active material, Super-P as a conductive material, and polyacrylic acid were mixed at a weight ratio of 80: 10: 10 with water to prepare a negative electrode active material composition having a solids content of 45%.

The negative electrode active material composition was applied to a copper foil having a thickness of 18 μm and dried to prepare an electrode having a thickness of 70 μm. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 μm was used as a separator. A liquid electrolyte in which $LiPF_6$ had been dissolved at a concentration of 1 M in a mixed solvent of ethylene carbonate (EC) and diethylene carbonate (DEC) at a volume ratio of 1:1 was used as an electrolyte. The above components were employed to fabricate a coin cell (battery) having a thickness of 3.2 mm and a diameter of 20 mm.

**Examples 2 to 12**

Silicon-carbon mixtures and lithium secondary batteries were each prepared in the same manner as in Example 1, except that the types of the first composite and the second composite, their mixing weight ratio, and O/Si molar ratio were changed as shown in Table 5 below.

**Comparative Example 1**

A lithium secondary battery was prepared in the same manner as in Example 1, except that the first composite obtained in Preparation Example 3-1 alone was used without using the second composite as shown in Table 6 below.

**Comparative Example 2**

A lithium secondary battery was prepared in the same manner as in Example 1, except that the second composite obtained in Preparation Example 4-1 alone was used without using the first composite as shown in Table 6 below.

**Comparative Example 3**

Silicon-carbon mixtures and lithium secondary batteries were each prepared in the same manner as in Example 1, except that the types of the first composite and the second composite, their mixing weight ratio, and O/Si molar ratio were changed as shown in Table 6 below.

**<Test Example 1> X-ray diffraction analysis**

**Measurement of Si crystal sizes**

The crystal sizes of Si in the first silicon particles and in the second silicon particles in the silicon-carbon mixture were determined by the Scherrer equation of the following Equation 3 based on a full width at half maximum (FWHM) of the peak corresponding to Si (220) around $2\theta = 47.5°$ in the X-ray diffraction analysis.

$$[\text{Equation 3}]$$

$$\text{Crystal size (nm)} = K\lambda/B\cos\theta$$

In Equation 3, K is 0.9, $\lambda$ is 0.154 nm, B is a full width at half maximum (FWHM), and $\theta$ is a peak position (angle).

**Crystal structure of silicon-carbon mixtures**

The crystal structure of the silicon-carbon mixtures prepared in the Examples was analyzed with an X-ray diffraction analyzer (X'Pert3 of Malvern Panalytical). Specifically, the applied voltage was 40 kV and the applied current was 40 mA. The range of $2\theta$ was 10° to 80°, and the measurement was carried out by scanning at an interval of 0.05°.

As a result of the analysis, it was confirmed that the silicon-carbon mixtures of the Examples each had a peak corresponding to Si crystals, indicating that they contained crystalline Si, and peaks of $MgSiO_3$ and $SiO_2$ were also observed.

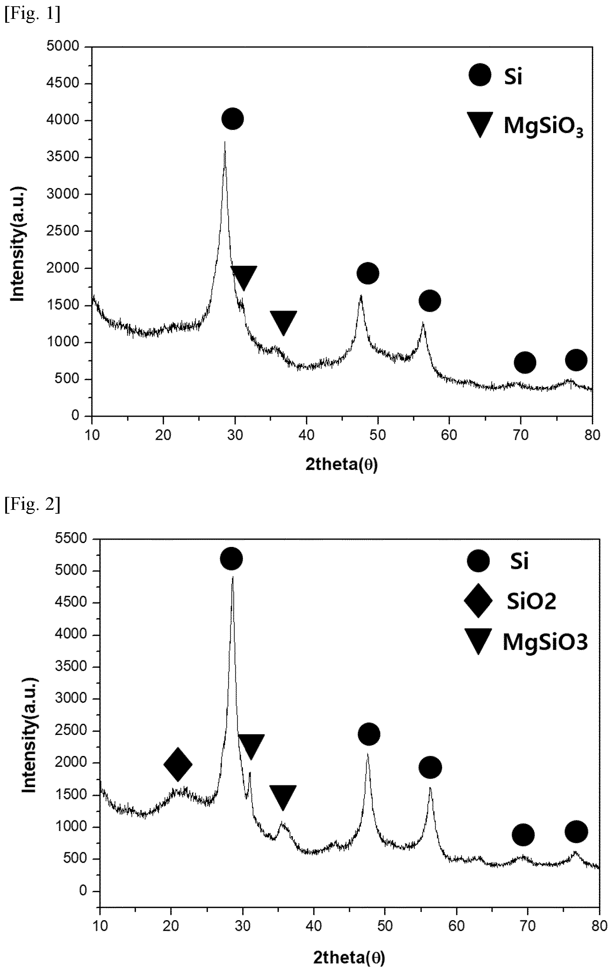

Specifically, as can be seen from the X-ray diffraction pattern of Fig. 1, the silicon-carbon mixture of Example 1 had peaks corresponding to Si crystals around diffraction angles ($2\theta$) of 28.6°, 47.5°, 56.2°, 69.3°, and 76.6°, indicating that it contained crystalline Si. In addition, the diffraction angles ($2\theta$) of $MgSiO_3$ were observed at 30.4° and 35.6°. $SiO_2$ was observed at 21.3°.

As can be seen from the X-ray diffraction pattern of Fig. 2, the silicon-carbon mixture of Example 7 had peaks corresponding to Si crystals around diffraction angles ($2\theta$) of 28.5°, 47.3°, 56.2°, 69.2°, and 76.7°, indicating that it contained crystalline Si. In addition, the diffraction angles ($2\theta$) of $MgSiO_3$ were observed at 31.0° and 35.4°. $SiO_2$ was observed at 21.3°.

**<Test Example 2> Electron microscope analysis**

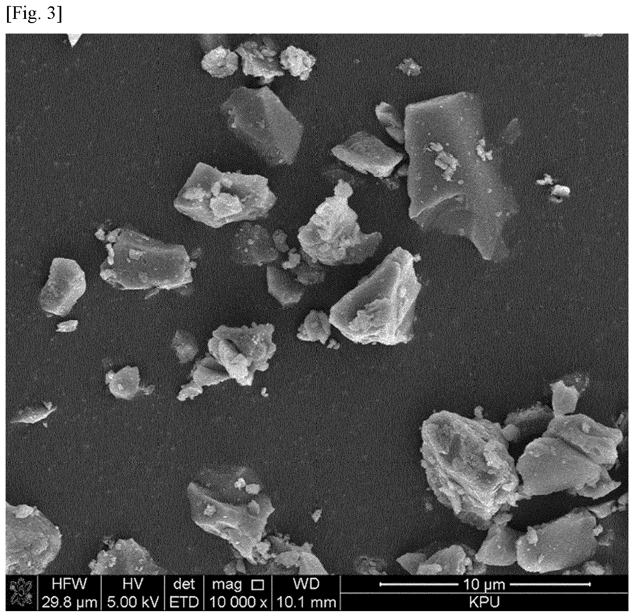

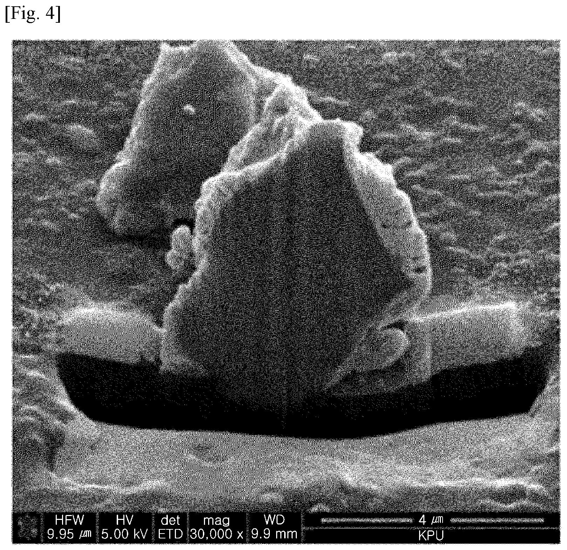

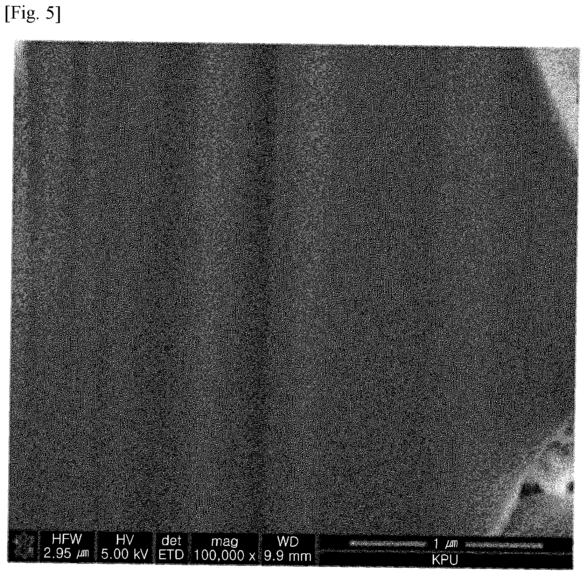

The porous silicon composite prepared in Preparation Example 2-1 was observed at magnifications of 10,000, 30,000, and 100,000 using an ion beam scanning electron microscope (FIB-SEM, Focused Ion Beam System/Quanta 3D FEG). The results are shown in Figs. 3 to 5.

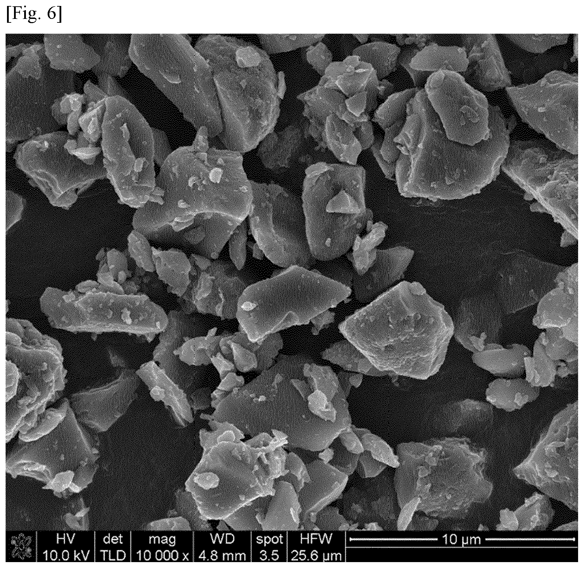

In addition, the first composite prepared in Preparation Example 3-1 was observed at a magnification of 10,000 using a scanning electron microscope (FE-SEM, S-4700; Hitachi). The results are shown in Fig. 6.

In Fig. 6, bright white particles indicate the first silicon (Si) particles (crystalline), and dark portions indicate carbon (C).

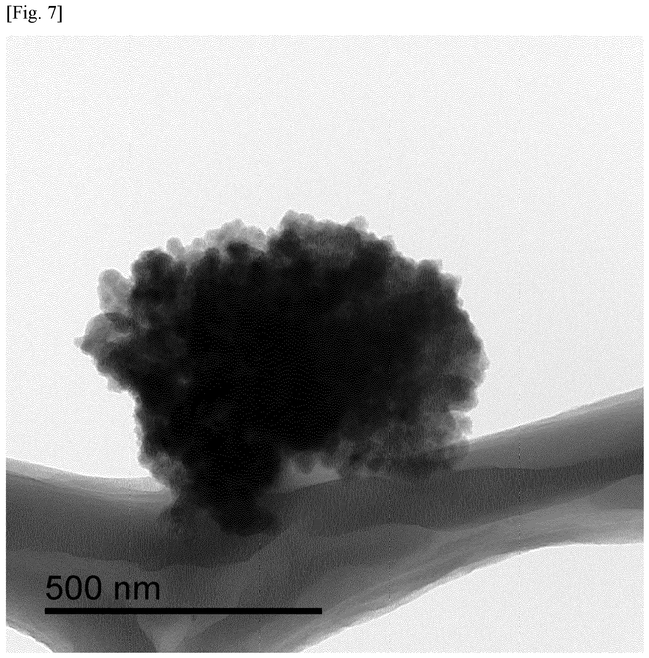

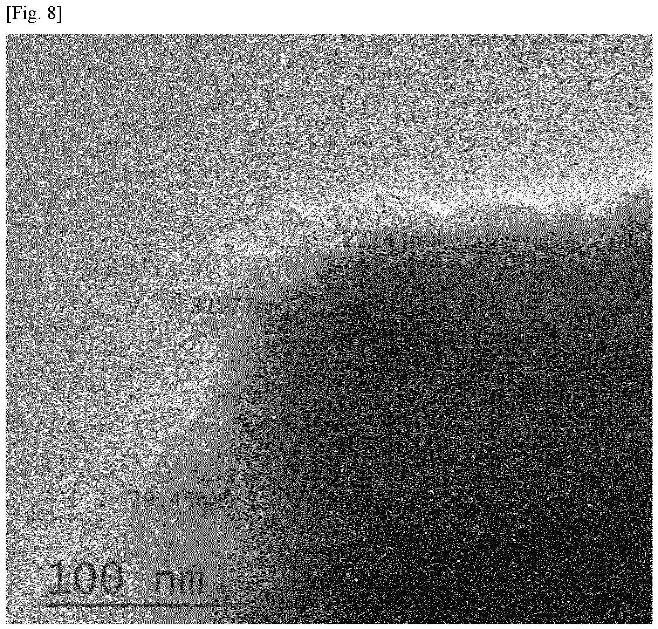

In addition, the first composite prepared in Preparation Example 3-1 was observed using a transmission electron microscope (FE-TEM, TECNAI G2 F20). The results are shown in Figs. 7 and 8.

Fig. 7 is an FE-TEM photograph of the first composite prepared in Preparation Example 3-1. It shows the result of a bright field image. Fig. 8 shows the result of a dark field image and a bright field image.

As can be seen from Figs. 7 and 8, a carbon coating layer having a thickness of about $27 \pm 5$ nm was formed on the surface of the first composite.

**<Test Example 3> Analysis of the content of the component elements and density of the composite**

The contents of magnesium (Mg), oxygen (O), carbon (C), and silicon (Si) in the first composite, the second composite, and the silicon-carbon mixture were analyzed.

The content of magnesium (Mg) was analyzed by inductively coupled plasma (ICP) emission spectroscopy. The contents of oxygen (O) and carbon (C) were measured by an elemental analyzer, respectively. The content of silicon (Si) was a value calculated based on the contents of oxygen (O) and magnesium (Mg).

Meanwhile, the components contained in the silicon-carbon mixture were confirmed using FIB-SEM EDS (S-4700; Hitachi, QUANTA 3D FEG; FEI, EDS System; EDAX). As a result, Mg, C, O, and Si components were observed in the silicon-carbon mixture.

Meanwhile, for the densities of the first composite and the second composite particles and of the silicon-carbon mixture, Acupick II1340 manufactured by Shimadzu Corporation was used, and the measurement was carried out after 200 times of purge with helium gas in a sample holder set at a temperature of 23°C.

**<Test Example 4> Measurement of an average particle diameter of the composite and composite particles**

The average particle diameter ($D_{50}$) of the first and second composites particles and the silicon-carbon mixture particles was measured as a diameter average value $D_{50}$, i.e., a particle size or median diameter when the cumulative volume is 50% in particle size distribution measurement according to a laser beam diffraction method.

**<Test Example 5> Measurement of capacity, initial efficiency, and capacity retention rate of the lithium secondary battery**

The monocells (lithium secondary batteries) prepared in the Examples and Comparative Examples were each charged at a constant current of 0.1 C until the voltage reached 0.005 V and then the current reached 0.005 C at a constant voltage. It was then discharged at a constant current of 0.1 C until the voltage reached 2.0 V to measure the charge capacity (mAh /g), discharge capacity (mAh/g), and initial efficiency (%). The results are shown in Tables 5 and 6 below.

$$[\text{Equation 4}]$$

$$\text{Initial efficiency (\%)} = \text{discharge capacity/charge capacity} \times 100$$

In addition, the monocells (lithium secondary batteries) prepared in the Examples and Comparative Examples were each charged at a constant current of 0.1 C until the voltage reached 4.25 V and then the current reached 0.05 C at a constant voltage. It was then discharged at a constant current of 0.1 C until the voltage reached 2.5 V. 1,000 cycles under these conditions were carried out to measure a capacity retention rate upon 1,000 cycles according to the following Equation 5.

Capacity retention rate upon 1,000 cycles (%) = discharge capacity upon 1,000 cycles/discharge capacity of first cycle $\times$ 100
[Equation 5]

The content of each element and the physical properties of the first composite and the second composite prepared in the Preparation Examples are summarized in Tables 3 and 4 below, and the content of each element and the physical properties of the mixture or composite prepared in the Examples and Comparative Examples, and the characteristics of the lithium secondary batteries using the same are summarized in Tables 5 to 7 below.

[Table 1]

| | | Preparation Example 1-1 |
|---|---|---|
| silicon oxide(oxygen-containing silicon compound) | O content (% by weight) | 36 |
| | O/Si molar ratio | 0.99 |
| | $D_{50}$ ($\mu$m) | 4.8 |
| | Density (g/cm$^3$) | 2.31 |
| | BET (m$^2$/g) | 3.2 |

[Table 2]

| | | Prep. Ex. 2-1 | Prep. Ex. 2-2 | Prep. Ex. 2-3 | Prep. Ex. 2-4 | Prep. Ex. 2-5 |
|---|---|---|---|---|---|---|
| Porous silicon composite | O content (% by weight) | 0.56 | 5.90 | 20.79 | 11.15 | 12.50 |
| | O/Si molar ratio | 0.01 | 0.11 | 0.46 | 0.22 | 0.25 |
| | Si crystallite size (nm) | 2.2 | 2.3 | 4.2 | 2.4 | 2.5 |
| | $D_{50}$ ($\mu$m) | 4.5 | 4.7 | 4.8 | 4.6 | 4.7 |
| | Density (g/cm$^3$) | 1.71 | 1.76 | 1.84 | 1.81 | 1.81 |
| | Pore volume (cm$^3$/g) | 0.772 | 0.731 | 0.379 | 0.582 | 0.558 |
| | BET (m$^2$/g) | 1,174.6 | 1,054.6 | 409.2 | 890.1 | 864.2 |

[Table 3]

| | | Prep. Ex. 3-1 | Prep. Ex. 3-2 | Prep. Ex. 3-3 | Prep. Ex. 3-4 | Prep. Ex. 3-5 | Prep. Ex. 3-6 | Prep. Ex. 3-7 | Prep. Ex. 3-8 | Prep. Ex. 3-9 | Prep. Ex. 3-10 |
|---|---|---|---|---|---|---|---|---|---|---|---|
| First composite | Porous silicon composite | Prep. Ex. 2-1 | Prep. Ex. 2-2 | Prep. Ex. 2-3 | Prep. Ex. 2-4 | Prep. Ex. 2-5 | Prep. Ex. 2-2 | Prep. Ex. 2-5 | Prep. Ex. 2-1 | Prep. Ex. 2-3 | Prep. Ex. 2-2 |
| | C content (% by weight) | 32 | 36 | 23 | 31 | 26 | 15 | 25 | 34 | 36 | 37 |
| | O content (% by weight) | 0.39 | 3.77 | 15.99 | 7.69 | 9.20 | 5.87 | 11.70 | 0.74 | 5.97 | 4.06 |
| | O/Si molar ratio | 0.01 | 0.11 | 0.46 | 0.22 | 0.25 | 0.13 | 0.30 | 0.02 | 0.18 | 0.12 |
| | Si crystallite size (nm) | 3.0 | 2.9 | 4.5 | 2.8 | 2.7 | 3.8 | 3.1 | 2.9 | 2.8 | 2.8 |
| | $D_{50}$ (μm) | 5.0 | 4.2 | 4.9 | 4.5 | 4.7 | 4.8 | 4.6 | 4.9 | 4.7 | 4.5 |
| | Density (g/cm³) | 2.15 | 2.23 | 2.21 | 2.24 | 2.18 | 2.05 | 2.19 | 2.23 | 2.27 | 2.32 |
| | BET (m²/g) | 3.5 | 4.1 | 4.3 | 3.7 | 3.1 | 17 | 4.2 | 3.6 | 3.7 | 3.9 |

[Table 4]

| | | Preparation Example 4-1 | Preparation Example 4-2 |
|---|---|---|---|
| Second composite | C content (% by weight) | 5.1 | 6 |
| | O content (% by weight) | 29.5 | 27.5 |
| | Mg content (% by weight) | 5 | 7 |
| | O/Si molar ratio | 0.98 | 0.99 |
| | Si crystallite size (nm) | 6.3 | 6.8 |
| | $D_{50}$ ($\mu$m) | 5.2 | 5.4 |
| | Density (g/cm$^3$) | 2.36 | 2.35 |
| | BET (m$^2$/g) | 6.0 | 5.5 |

[Table 5]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| | First composite | Prep. Ex. 3-1 | Prep. Ex. 3-1 | Prep. Ex. 3-2 | Prep. Ex. 3-2 | Prep. Ex. 3-3 | Prep. Ex. 3-4 | Prep. Ex. 3-5 | Prep. Ex. 3-6 | Prep. Ex. 3-7 | Prep. Ex. 3-8 | Prep. Ex. 3-9 | Prep. Ex. 3-10 |
| | Second composite | Prep. Ex. 4-1 | Prep. Ex. 4-1 | Prep. Ex. 4-2 | Prep. Ex. 4-1 | Prep. Ex. 4-2 | Prep. Ex. 4-2 | Prep. Ex. 4-1 | Prep. Ex. 4-1 | Prep. Ex. 4-2 | Prep. Ex. 4-1 | Prep. Ex. 4-2 | Prep. Ex. 4-1 |
| | First composite : second composite (weight ratio) | 90:10 | 60:40 | 70:30 | 80:20 | 80:20 | 60:40 | 70:30 | 40:60 | 50:50 | 60:40 | 80:20 | 70:30 |
| Silicon-carbon mixture | Mg content (% by weight) | 0.5 | 2.0 | 2.1 | 1.0 | 1.3 | 2.8 | 1.5 | 3.1 | 3.5 | 2.1 | 1.4 | 1.5 |
| | C content (% by weight) | 29.3 | 21.2 | 24.2 | 29.8 | 19.8 | 21.1 | 20.1 | 9.2 | 15.4 | 22.6 | 29.9 | 27.5 |
| | O content (% by weight) | 3.6 | 13.1 | 9.7 | 9.5 | 18.4 | 17.2 | 16.2 | 20.1 | 19.2 | 12.2 | 10.3 | 11.7 |
| | Mg/Si molar ratio | 0.009 | 0.036 | 0.038 | 0.019 | 0.026 | 0.055 | 0.028 | 0.052 | 0.065 | 0.037 | 0.028 | 0.030 |
| | O/Si molar ratio | 0.09 | 0.36 | 0.27 | 0.28 | 0.55 | 0.50 | 0.45 | 0.52 | 0.54 | 0.34 | 0.31 | 0.35 |
| | Si crystallite size (nm) | 4.8 | 5.7 | 4.9 | 4.3 | 5.0 | 5.4 | 5.1 | 5.3 | 5.0 | 4.3 | 3.6 | 3.9 |
| | $D_{50}$ ($\mu$m) | 5.0 | 5.1 | 5.2 | 5.2 | 5.1 | 5.1 | 5.0 | 5.1 | 5.0 | 5.1 | 4.8 | 4.7 |
| | Density (g/cm$^3$) | 2.18 | 2.28 | 2.31 | 2.26 | 2.24 | 2.26 | 2.29 | 2.24 | 2.27 | 2.29 | 2.29 | 2.34 |
| | BET (m$^2$/g) | 4.3 | 5.2 | 4.8 | 4.5 | 4.7 | 4.9 | 4.6 | 10.4 | 4.9 | 4.6 | 4.1 | 4.5 |

(continued)

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Secondary battery | Discharge capacity (mAh/g) | 1,784 | 1,547 | 1,662 | 1,641 | 1,417 | 1,437 | 1,472 | 1,408 | 1,428 | 1,544 | 1,561 | 1,452 |
| | Initial efficiency (%) | 87.1 | 85.4 | 86.7 | 86.8 | 82.6 | 83.6 | 84.2 | 83.2 | 83.1 | 85.2 | 85.1 | 84.3 |
| | Capacity retention rate upon 50 cycles (%) | 86.7 | 88.6 | 87.9 | 87.4 | 85.1 | 88.4 | 87.9 | 85.1 | 86.9 | 86.8 | 87.1 | 88.1 |

[Table 6]

| | | | Comp. Ex. 1 | Comp. Ex. 2 | Comp. Ex. 3 |
|---|---|---|---|---|---|
| Composite/ mixture | | First composite | Prep. Ex. 3-1 | × | Prep. Ex. 3-7 |
| | | Second composite | × | Prep. Ex. 4-1 | Prep. Ex. 4-2 |
| | | First composite: second composite (weight ratio) | 10:0 | 0:10 | 1:9 |
| | | Mg content (% by weight) | × | 5.0 | 6.3 |
| | | C content (% by weight) | 32 | 5.1 | 7.9 |
| | | O content (% by weight) | 0.39 | 29.5 | 29.4 |
| | | Mg/Si molar ratio | × | 0.1 | 0.129 |
| | | O/Si molar ratio | 0.01 | 0.98 | 0.91 |
| | | Si crystallite size (nm) | 3.0 | 6.3 | 6.5 |
| | | $D_{50}$ ($\mu$m) | 5.0 | 5.2 | 5.3 |
| | | Density (g/cm$^3$) | 2.15 | 2.36 | 2.33 |
| | | BET (m$^2$/g) | 3.5 | 6.0 | 5.4 |
| Secondary battery characteristics | | Discharge capacity (mAh/g) | 1,810 | 1,354 | 1,368 |
| | | Initial efficiency (%) | 87.8 | 81.0 | 82.1 |
| | | Capacity retention rate upon 50 cycles (%) | 78.4 | 88.6 | 85.4 |

[Table 7]

| Characteristics of the secondary battery | Ex. 10 | Ex. 11 | Ex. 12 | Comp. Ex. 1 | Comp. Ex. 2 | Comp. Ex. 3 |
|---|---|---|---|---|---|---|
| Capacity retention rate upon 1,000 cycles (%) | 66 | 73 | 69 | 52 | 57 | 54 |

As can be seen from Tables 5 to 7 above, in the lithium secondary batteries of Examples 1 to 12, in which a silicon-carbon mixture comprising a first composite and a second composite as two or more composites, comprising silicon particles, magnesium silicate, and carbon, and having a molar ratio (O/Si) of oxygen (O) atoms to silicon (Si) atoms satisfying a specific range was used, all the performances were enhanced as compared with the lithium secondary batteries of Comparative Examples 1 to 3 when the discharge capacity, initial efficiency, and capacity retention rate were comprehensively evaluated.

Specifically, the lithium secondary batteries of Examples 1 to 12 using a silicon-carbon mixture comprising a first composite and a second composite and having a molar ratio (O/Si) of oxygen (O) atoms to silicon (Si) atoms of 0.09 to 0.56 had a discharge capacity of about 1,400 mAh/g or more in most cases, an initial efficiency of about 83% or more, and a capacity retention rate upon 50 cycles of about 85% or more. In addition, the lithium secondary batteries of Examples 10 to 12 had a capacity retention rate upon 1,000 cycles of about 66% or more, indicating that the performance of the lithium secondary batteries was overall excellent, and their reliability was enhanced.

In contrast, in the lithium secondary battery of Comparative Example 1 using a silicon-carbon mixture comprising a first composite alone in the negative electrode active material and had a molar ratio (O/Si) of oxygen (O) atoms to silicon (Si) atoms of 0.01, the capacity retention rate was 78.4%, and the capacity retention rate upon 1,000 cycles was 52%, showing a significant decrease as compared with the lithium secondary batteries of the Examples.

In addition, in the lithium secondary battery of Comparative Example 2 using a silicon-carbon mixture comprising a second composite alone in the negative electrode active material and had a molar ratio (O/Si) of oxygen (O) atoms to silicon (Si) atoms of 0.98, the discharge capacity was about 1,354 mAh/g, the initial efficiency was 81%, and the capacity retention rate upon 1,000 cycles was 57%, showing a significant decrease as compared with the lithium secondary batteries of the Examples.

Meanwhile, in the lithium secondary battery of Comparative Example 3 using a silicon-carbon mixture comprising a first composite and a second composite while having a molar ratio (O/Si) of oxygen (O) atoms to silicon (Si) atoms of 0.91, the discharge capacity was 1,368 mAh/g, the initial efficiency was 82.1%, and the capacity retention rate upon 1,000 cycles was about 54%, showing a significant decrease as compared with the lithium secondary batteries of the Examples.

Meanwhile, when the molar ratio (O/Si) of oxygen (O) atoms to silicon (Si) atoms was less than 0.06, fabrication itself was not possible.

Further, according to an embodiment, since the content of carbon and porosity can be easily controlled, and, as a result, an excellent capacity retention rate can be maintained even after cycles of thousands or more for a long period of time, while the above molar ratio (O/Si) of oxygen (O) atoms to silicon (Si) atoms in the silicon-carbon mixture is satisfied, it is possible to further enhance reliability.

**Claims**

1. A silicon-carbon mixture, which comprises two or more types of composites, comprises silicon particles, magnesium silicate, and carbon, and has a molar ratio (O/Si) of oxygen (O) atoms to silicon (Si) atoms of 0.06 and 0.90.

2. The silicon-carbon mixture of claim 1, wherein the two or more types of composites comprise a first composite and a second composite,

   the first composite comprises first silicon particles and first carbon, and
   the second composite comprises second silicon particles, magnesium silicate, and second carbon.

3. The silicon-carbon mixture of claim 2, wherein the molar ratio (O/Si) of oxygen (O) atoms to silicon (Si) atoms in the first composite is 0.005 to 0.50, and the molar ratio (O/Si) of oxygen (O) atoms to silicon (Si) atoms in the second composite is 0.8 to 1.2.

4. The silicon-carbon mixture of claim 2, wherein the weight ratio of the first composite and the second composite is 90: 10 to 5:95.

5. The silicon-carbon mixture of claim 1, wherein the silicon-carbon mixture comprises a silicon aggregate in which silicon particles are combined with each other, and the magnesium silicate comprises $MgSiO_3$, $Mg_2SiO_4$, or a mixture thereof.

6. The silicon-carbon mixture of claim 1, wherein, based on the total weight of the silicon-carbon mixture,

   the content of oxygen (O) is 1% by weight to 25% by weight,
   the content of silicon (Si) is 35% by weight to 80% by weight,
   the content of magnesium (Mg) is 0.1% by weight to 15% by weight, and
   the content of carbon (C) is 9% by weight to 50% by weight, in the silicon-carbon mixture, and
   wherein the molar ratio (Mg/Si) of magnesium (Mg) atoms to silicon (Si) atoms in the silicon-carbon mixture is 0.009 to 0.55.

7. The silicon-carbon mixture of claim 1, wherein the silicon-carbon mixture further comprises silicon oxide ($SiO_x$, $0.4 < x \leq 2$).

8. The silicon-carbon mixture of claim 2, wherein the first composite comprises a silicon composite and a first carbon layer on the surface thereof, the first silicon particles are present in the silicon composite, and the first carbon is contained in the first carbon layer and inside the silicon composite, and
   wherein the second composite comprises a silicon composite oxide and a second carbon layer on its surface, the second silicon particles and the magnesium silicate are present in the silicon composite oxide, and the second carbon is contained in at least one selected from the group consisting of the second carbon layer, the surfaces of the second silicon particles, and the surface of the second magnesium silicate.

9. The silicon-carbon mixture of claim 2, wherein the content of oxygen (O) in the first composite is 0.1% by weight to 16% by weight based on the total weight of the first composite, and
   the content of oxygen (O) in the second composite is 20% by weight to 40% by weight based on the total weight of the second composite.

10. The silicon-carbon mixture of claim 2, wherein the content of carbon (C) in the first composite is 10% by weight to 50% by weight based on the total weight of the first composite, and

the content of carbon (C) in the second composite is 3% by weight to 15% by weight based on the total weight of the second composite.

11. A process for preparing the silicon-carbon mixture of claim 1, which comprises:

a first step of obtaining a first composite;
a second step of obtaining a second composite; and
a third step of mixing the first composite and the second composite,
wherein the first composite comprises first silicon particles and first carbon, and the second composite comprises second silicon particles, magnesium silicate, and second carbon.

12. The process for preparing the silicon-carbon mixture according to claim 11, wherein the first step of obtaining the first composite comprises:

a first-first step of etching a first silicon-based raw material using an etching solution containing a fluorine (F) atom-containing compound;
a first-second step of obtaining a silicon composite by filtering and drying the product obtained by the etching; and
a first-third step of forming first carbon inside the silicon composite and a first carbon layer on the surface of the silicon composite using a chemical thermal decomposition deposition method to obtain a first composite.

13. The process for preparing the silicon-carbon mixture according to claim 11, wherein the second step for preparing the second composite comprises:

a second-first step of obtaining a silicon composite oxide using a second silicon-based raw material and a magnesium-based raw material;
a second-second step of pulverizing and/or classifying the silicon composite oxide to obtain a silicon composite oxide powder; and
a second-third step of forming a second carbon layer on the surface of the silicon composite oxide powder using a chemical thermal decomposition deposition method to obtain a second composite.

14. A negative electrode active material, which comprises the silicon-carbon mixture of claim 1.

15. A lithium secondary battery, which comprises the negative electrode active material of claim 14.

[Fig. 1]

[Fig. 2]

[Fig. 3]

[Fig. 4]

[Fig. 5]

[Fig. 6]

[Fig. 7]

500 nm

[Fig. 8]

## INTERNATIONAL SEARCH REPORT

International application No.

**PCT/KR2023/003962**

### A. CLASSIFICATION OF SUBJECT MATTER

**H01M 4/36**(2006.01)i; **H01M 4/587**(2010.01)i; **H01M 4/133**(2010.01)i; **H01M 4/134**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01B 32/158(2017.01); C01B 32/182(2017.01); C01B 32/186(2017.01); C01B 33/32(2006.01); H01G 11/30(2013.01); H01M 10/0525(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 규소(silicon), 규산 마그네슘(magnesium silicate), 탄소(carbon), 산소(oxygen), 몰비(molar ratio), 음극 활물질(anode active material)

### C. DOCUMENTS CONSIDERED TO BE RELEVANT

| Category* | Citation of document, with indication, where appropriate, of the relevant passages | Relevant to claim No. |
|---|---|---|
| A | KR 10-2017-0137000 A (LG CHEM, LTD.) 12 December 2017 (2017-12-12) See claims 1, 3, 6-7, 10 and 18-19; paragraphs [0038], [0056], [0102], [0125] and [0248]; and figure 2. | 1-15 |
| A | JP 2017-010645 A (SHIN ETSU CHEM. CO., LTD.) 12 January 2017 (2017-01-12) See entire document. | 1-15 |
| A | KR 10-2021-0094685 A (DAE JOO ELECTRONIC MATERIALS CO., LTD.) 30 July 2021 (2021-07-30) See entire document. | 1-15 |
| A | KR 10-2020-0100252 A (DAE JOO ELECTRONIC MATERIALS CO., LTD.) 26 August 2020 (2020-08-26) See entire document. | 1-15 |
| A | KR 10-2018-0087340 A (CORNING INCORPORATED) 01 August 2018 (2018-08-01) See entire document. | 1-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **30 June 2023** | **03 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| | International application No. |
|---|---|
| | **PCT/KR2023/003962** |

| Patent document cited in search report | | | Publication date (day/month/year) | Patent family member(s) | | | Publication date (day/month/year) |
|---|---|---|---|---|---|---|---|
| KR | 10-2017-0137000 | A | 12 December 2017 | CN | 108292745 | A | 17 July 2018 |
| | | | | CN | 108292745 | B | 12 October 2021 |
| | | | | EP | 3343677 | A1 | 04 July 2018 |
| | | | | EP | 3343677 | A4 | 27 February 2019 |
| | | | | JP | 2019-508842 | A | 28 March 2019 |
| | | | | JP | 7027644 | B2 | 02 March 2022 |
| | | | | KR | 10-1837347 | B1 | 09 March 2018 |
| | | | | US | 11133524 | B2 | 28 September 2021 |
| | | | | US | 2018-0342757 | A1 | 29 November 2018 |
| | | | | US | 2021-0351432 | A1 | 11 November 2021 |
| | | | | WO | 2017-209561 | A1 | 07 December 2017 |
| JP | 2017-010645 | A | 12 January 2017 | CN | 107710466 | A | 16 February 2018 |
| | | | | CN | 107710466 | B | 03 November 2020 |
| | | | | EP | 3312916 | A1 | 25 April 2018 |
| | | | | EP | 3312916 | A4 | 20 March 2019 |
| | | | | JP | 6407804 | B2 | 17 October 2018 |
| | | | | KR | 10-2018-0019569 | A | 26 February 2018 |
| | | | | TW | 201717457 | A | 16 May 2017 |
| | | | | TW | I709273 | B | 01 November 2020 |
| | | | | US | 10418627 | B2 | 17 September 2019 |
| | | | | US | 2018-0175377 | A1 | 21 June 2018 |
| | | | | WO | 2016-203696 | A1 | 22 December 2016 |
| KR | 10-2021-0094685 | A | 30 July 2021 | EP | 4095947 | A1 | 30 November 2022 |
| | | | | JP | 2023-511165 | A | 16 March 2023 |
| | | | | US | 2023-0049476 | A1 | 16 February 2023 |
| | | | | WO | 2021-149996 | A1 | 29 July 2021 |
| KR | 10-2020-0100252 | A | 26 August 2020 | KR | 10-2171499 | B1 | 30 October 2020 |
| KR | 10-2018-0087340 | A | 01 August 2018 | CN | 108290740 | A | 17 July 2018 |
| | | | | CN | 108290740 | B | 04 March 2022 |
| | | | | EP | 3380436 | A1 | 03 October 2018 |
| | | | | US | 11139473 | B2 | 05 October 2021 |
| | | | | US | 2020-0220170 | A1 | 09 July 2020 |
| | | | | WO | 2017-091543 | A1 | 01 June 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4393610 B
- JP 2016502253 A
- KR 20180106485